# EUROPEAN PATENT APPLICATION

(11) **EP 4 254 155 A1**
(43) Date of publication of application: **04.10.2023**
(21) Application number: 22199315.7
(22) Date of filing: 01.10.2022
(51) Int. Cl.: G06F 3/0482, G06F 3/04842

(54) **INFORMATION PROCESSING SYSTEM AND METHOD AND PROGRAM**

(30) Priority: 29.03.2022 JP 2022053685
(71) Applicant: Fujifilm Business Innovation Corp., Tokyo 107-0052 (JP)
(72) Inventor: SAKATA, Yui, Yokohama (JP)
(74) Representative: Meissner Bolte Partnerschaft mbB

(57) **Abstract**

An information processing system includes a processor configured to: display an enlarged image on a display in response to a file image being selected, the file image being an image corresponding to a file and displayed on the display, the enlarged image being an image associated with the selected file image and having a display size larger than the selected file image; and display information on a background image on the display if a file image is located behind the displayed enlarged image and if a predetermined condition is satisfied, the background image being the file image located behind the displayed enlarged image.

## Description

### Background

### (i) Technical Field

The present disclosure relates to an information processing system and method and a program.

### (ii) Related Art

Japanese Unexamined Patent Application Publication No. 2008-77210 discloses the following configuration. An image based on document data and a thumbnail image of the document data are displayed on a screen. A user operation performed on this screen is recognized as operation information. Based on the operation information recognized as an operation performed on the thumbnail image, a display condition for displaying an image in an enlarged size on the screen is determined. The image is displayed in an enlarged size based on the determined display condition.

### Summary

When an image is displayed on a display in response to a user selecting a file image, a different file image may be located behind the displayed image. In this case, if information on this different file image is displayed, the user can recognize the presence of this file image.

On the other hand, if such information is constantly displayed, the amount of information on the display is increased, which may make the display difficult to view for the user.

Accordingly, it is an object of the present disclosure to make a display easy to view for a user, compared with the configuration in which information on a file image located behind an image displayed in response to a file image being selected is constantly displayed on the display.

According to a first aspect of the present disclosure, there is provided an information processing system including a processor configured to: display an enlarged image on a display in response to a file image being selected, the file image being an image corresponding to a file and displayed on the display, the enlarged image being an image associated with the selected file image and having a display size larger than the selected file image; and display information on a background image on the display if a file image is located behind the displayed enlarged image and if a predetermined condition is satisfied, the background image being the file image located behind the displayed enlarged image.

According to a second aspect of the present disclosure, in the information processing system according to the first aspect, the processor may be configured to display the information on the background image on the display if a first enlarged image, which is the enlarged image, and a second enlarged image are displayed with a predetermined positional relationship, the second enlarged image being an enlarged image displayed in response to a file image being selected after a file image based on which the first enlarged image is displayed is selected, the background image being a file image located behind the displayed first enlarged image.

According to a third aspect of the present disclosure, in the information processing system according to the second aspect, the processor may be configured to display the information on the background image on the display if the first enlarged image and the second enlarged image are displayed without overlapping each other.

According to a fourth aspect of the present disclosure, in the information processing system according to the second aspect, the processor may be configured to display the information on the background image on the display if the first enlarged image, which is displayed prior to the second enlarged image, is displayed closer to an edge of the display than the second enlarged image is and if the second enlarged image is displayed closer to a center of the display than the first enlarged image is.

According to a fifth aspect of the present disclosure, in the information processing system according to the first aspect, the processor may be configured to: switch a display image including a file image to another display image including a file image by changing displaying of the display in response to an instruction; display a corresponding image on the display if a first display image is displayed on the display and if a specific condition is satisfied, the corresponding image being an image corresponding to a file image included in a second display image; display an enlarged image on the display in response to the corresponding image being selected, the enlarged image being an image associated with a file image included in the second display image and having a display size larger than a file image associated with the corresponding image; and display the information on the background image on the display if another file image is located behind the displayed enlarged image, the background image being the file image located behind the displayed enlarged image.

According to a sixth aspect of the present disclosure, in the information processing system according to the fifth aspect, the processor may be configured to display the information on the background image at a portion of the display outside a region where the first display image and the second display image are displayed.

According to a seventh aspect of the present disclosure, in the information processing system according to the first aspect, the processor may be configured to: display the file images within a predetermined display region of the display; and display the information on the background image outside the predetermined display region.

According to an eighth aspect of the present disclosure, in the information processing system according to the first aspect, the processor may be configured to display the information on the background image at a portion of the display outside a region where the enlarged image is displayed.

According to a ninth aspect of the present disclosure, in the information processing system according to the first aspect, the processor may be configured to: display a display image including a file image on the display, the file image being likely to be the background image; and display the information on the background image as a result of shifting the display image to display the file image at a position outside a region where the enlarged image is displayed.

According to a tenth aspect of the present disclosure, in the information processing system according to the first aspect, the processor may be configured to: display a display image including a file image on the display, the file image being likely to be the background image; and display the information on the background image as a result of shrinking the display image to display the file image at a position outside a region where the enlarged image is displayed.

According to an eleventh aspect of the present disclosure, in the information processing system according to any one of the first through tenth aspects, the processor may be configured to display the information on the background image in a state in which a user is able to select the information.

According to a twelfth aspect of the present disclosure, there is provided a program causing a computer to execute a process, the process including: displaying an enlarged image on a display in response to a file image being selected, the file image being an image corresponding to a file and displayed on the display, the enlarged image being an image associated with the selected file image and having a display size larger than the selected file image; and displaying information on a background image on the display if a file image is located behind the displayed enlarged image and if a predetermined condition is satisfied, the background image being the file image located behind the displayed enlarged image.

According to a thirteenth aspect of the present disclosure, there is provided an information processing method including: displaying an enlarged image on a display in response to a file image being selected, the file image being an image corresponding to a file and displayed on the display, the enlarged image being an image associated with the selected file image and having a display size larger than the selected file image; and displaying information on a background image on the display if a file image is located behind the displayed enlarged image and if a predetermined condition is satisfied, the background image being the file image located behind the displayed enlarged image.

According to the first aspect, it is possible to make a display easy to view for a user, compared with the configuration in which information on a file image located behind an image displayed in response to a file image being selected is constantly displayed on the display.

According to the second aspect, it is possible to display information on a background image on a display if a first enlarged image and a second enlarged image are displayed with a predetermined positional relationship. The background image is a file image located behind the displayed first enlarged image.

According to the third aspect, it is possible to display information on a background image on a display if the first enlarged image and the second enlarged image are displayed without overlapping each other. The background image is a file image located behind the displayed first enlarged image.

According to the fourth aspect, it is possible to display information on a background image on a display if the first enlarged image is displayed closer to an edge of the display than the second enlarged image is and if the second enlarged image is displayed closer to a center of the display than the first enlarged image is.

According to the fifth aspect, it is possible to display information on a background image on a display if a file image is located behind an enlarged image displayed in response to a corresponding image being selected. The background image is a file image located behind the displayed enlarged image.

According to the sixth aspect, it is possible to display information on a background image at a portion of a display outside a region where the first display image and the second display image are displayed.

According to the seventh aspect, it is possible to display information on a background image outside a region where a file image is displayed.

According to the eighth aspect, it is possible to display information on a background image outside a region where an enlarged image is displayed.

According to the ninth aspect, it is possible to display information on a background image outside a region where an enlarged image is displayed.

According to the tenth aspect, it is possible to display information on a background image outside a region where an enlarged image is displayed.

According to the eleventh aspect, it is possible to display information on a background image in a state in which a user is able to select the information.

According to the twelfth aspect, it is possible to make a display easy to view for a user, compared with the configuration in which information on a file image located behind an image displayed in response to a file image being selected is constantly displayed on the display.

According to the thirteenth aspect, it is possible to make a display easy to view for a user, compared with the configuration in which information on a file image located behind an image displayed in response to a file image being selected is constantly displayed on the display.

### Brief Description of the Drawings

An exemplary embodiment of the present disclosure will be described in detail based on the following figures, wherein:
Fig. 1 is a schematic diagram illustrating an example of the overall configuration of an information processing system;
Fig. 2 is a block diagram illustrating an example of the hardware configuration of a server device;
Fig. 3 is a block diagram illustrating an example of the hardware configuration of a terminal device;
Fig. 4 illustrates a display example on a display;
Fig. 5 illustrates a state of the display when an enlargement instruction image of a first file icon is clicked;
Fig. 6 illustrates another display example on the display;
Fig. 7 illustrates another display example on the display;
Fig. 8 illustrates another display example on the display;
Fig. 9 illustrates a state of the display after a workspace is switched to another workspace;
Fig. 10 illustrates another display example on the display;
Fig. 11 illustrates a state of the display when a file icon is selected first before a corresponding image;
Fig. 12 illustrates another display example on the display;
Fig. 13 illustrates another display example on the display;
Fig. 14 illustrates another display example on the display;
Fig. 15 illustrates another display example on the display;
Fig. 16 illustrates another display example on the display;
Fig. 17 illustrates another display example on the display;
Fig. 18 illustrates another display example on the display; and
Fig. 19 illustrates another display example on the display.

### Detailed Description

An exemplary embodiment of the disclosure will be described below in detail with reference to the accompanying drawings.

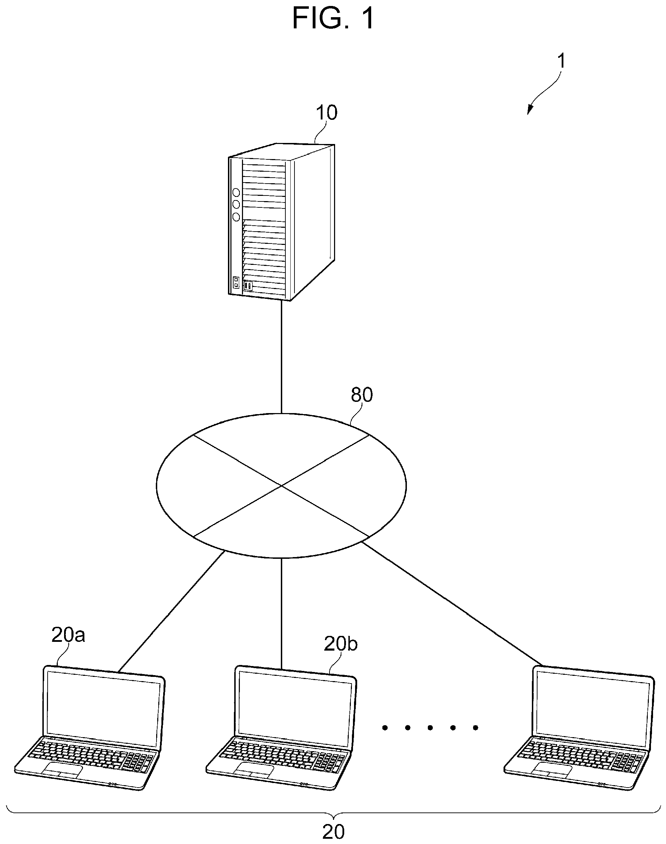

Fig. 1 is a schematic diagram illustrating an example of the overall configuration of an information processing system 1 according to the exemplary embodiment.

The information processing system 1 includes a server device 10 that manages files and terminal devices 20a, 20b, ... (hereinafter collectively called the terminal device 20 unless it is necessary to distinguish them from each other) that are used by users to view files. The server device 10 and the terminal device 20 are connected to each other via a communication network 80.

The communication network 80 is a network, such as the internet, and is used by the server device 10 and the terminal device 20 to perform communication therebetween. In the information processing system 1 of the exemplary embodiment, the terminal device 20 views and edits files uploaded to the server device 10.

In the exemplary embodiment, a file is a digital file stored in a device such as the server device 10.

A file may be represented by text and an image or only by an image. In addition to document data and image data, information for converting document data into an image and attribute information concerning a file may be included in the file. Examples of the attribute information are the update date, sheet size, and the number of pages of a file, and keywords within the file.

The server device 10 manages files uploaded from the terminal device 20. A file managed by the server device 10 may be shared by plural users and be edited by one or plural users.

The server device 10 is implemented by a computer, for example. The server device 10 may be constituted by a single computer or by plural computers that execute processing in a distributed manner.

The terminal device 20 is used by a user to view and edit a file managed by the server device 10.

The terminal device 20 includes a display that displays an image of a file. The terminal device 20 also includes a computer. Examples of the terminal device 20 are a desktop personal computer (PC), a laptop PC, a tablet information terminal, a smartphone, and a game machine.

The hardware configuration of the server device 10 will be described below.

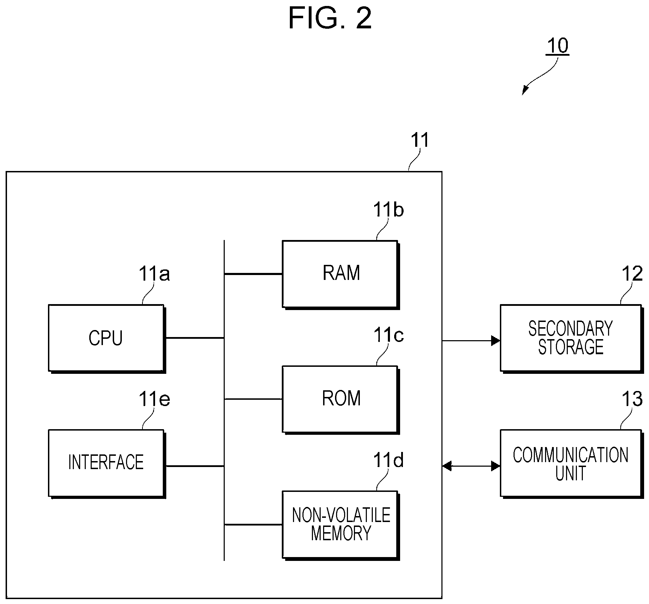

Fig. 2 is a block diagram illustrating an example of the hardware configuration of the server device 10 according to the exemplary embodiment.

The server device 10 includes an operation processor 11, a secondary storage 12, and a communication unit 13. The operation processor 11 executes digital calculations in accordance with a file management program. In the secondary storage 12, files, for example, are stored. The communication unit 13 sends and receives information via the communication network 80 (see Fig. 1).

The secondary storage 12 is implemented by an existing information storage, such as a hard disk drive (HDD), a semiconductor memory, or magnetic tape.

The operation processor 11 includes a central processing unit (CPU) 11a, which is an example of a processor. The CPU 11a controls the entirety of the server device 10.

The operation processor 11 also includes a random access memory (RAM) 11b used as a work memory for the CPU 11a, for example, and a read only memory (ROM) 11c that stores programs executed by the CPU 11a, for example.

The operation processor 11 also includes a non-volatile memory 11d and an interface 11e. The non-volatile memory 11d is a rewritable memory and can retain data even after power supply is interrupted. The interface 11e controls various elements, such as the communication unit 13, connected to the operation processor 11.

The non-volatile memory 11d is constituted by a battery-powered static random access memory (SRAM) or flash memory, for example. In the non-volatile memory 11d, information on files and information for relating files with each other, for example, are stored.

In the secondary storage 12, programs executed by the operation processor 11, as well as files, are stored.

In the exemplary embodiment, as a result of the operation processor 11 reading a program stored in the secondary storage 12, the server device 10 executes processing. The operation processor 11, the secondary storage 12, and the communication unit 13 are connected to each other via a bus or a signal line.

In response to a request from the terminal device 20, the server device 10 executes processing, such as obtaining a new file, extracting a file, relating files with each other, and reflecting the update content in a file.

In response to a request from the terminal device 20, the server device 10 provides a file, search processing results, and various items of information, such as update information, to the terminal device 20.

In the exemplary embodiment, the secondary storage 20 stores files and programs. The communication unit 13 receives a request from the terminal device 20 and sends a file requested by the terminal device 20, for example, to the terminal device 20.

A program to be executed by the CPU 11a of the server device 10 may be provided to the server device 10 while being stored in a computer readable recording medium, such as a magnetic recording medium (magnetic tape and a magnetic disk, for example), an optical recording medium (optical disc, for example), a magneto-optical disk, or a semiconductor memory. A program to be executed by the CPU 11a may be provided to the server device 10 via a communication medium, such as the internet.

The hardware configuration of the terminal device 20 will be discussed below.

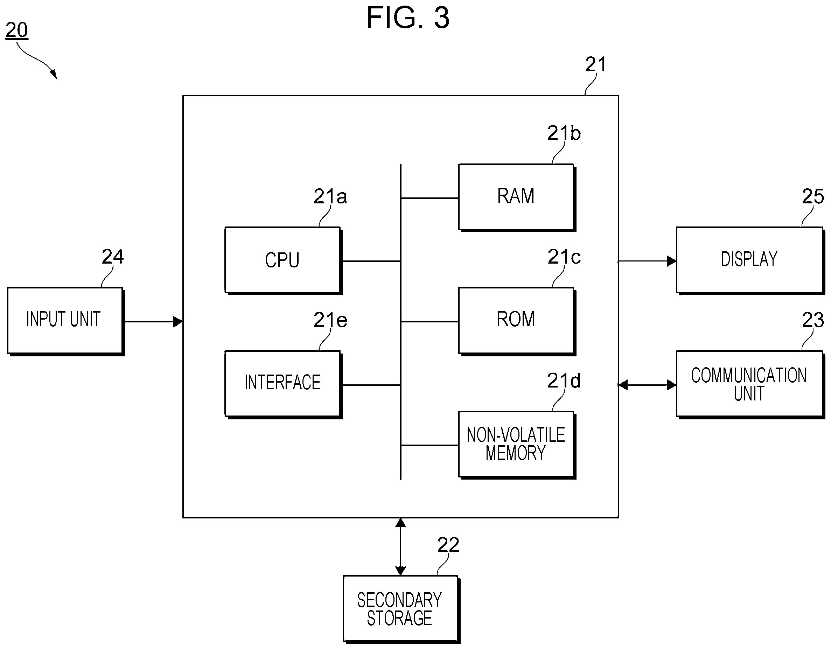

Fig. 3 is a block diagram illustrating an example of the hardware configuration of the terminal device 20.

The terminal device 20 includes an operation processor 21, a secondary storage 22, and a communication unit 23. The operation processor 21 executes image display processing in accordance with a program. In the secondary storage 22, files, for example, are stored. The communication unit 23 sends and receives information via the communication network 80 (see Fig. 1).

The terminal device 20 also includes an input unit 24 and a display 25. The input unit 24 receives an input operation from a user. The display 25 displays an image and text information for a user. The display 25 is constituted by a liquid crystal display panel or an organic electroluminescence (EL) display panel.

The secondary storage 22 is implemented by an existing information storage, such as an HDD, a semiconductor memory, or magnetic tape.

The operation processor 21 includes a CPU 21a, which is an example of a processor. The CPU 21a controls the entirety of the terminal device 20.

The operation processor 21 also includes a RAM 21b used as a work memory for the CPU 21a, for example, and a ROM 21c that stores programs executed by the CPU 21a, for example.

The operation processor 21 also includes a non-volatile memory 21d and an interface 21e. The non-volatile memory 21d is a rewritable memory and can retain data even after power supply is interrupted. The interface 21e controls various elements, such as the communication unit 23, connected to the operation processor 21.

The non-volatile memory 21d is constituted by a battery-powered SRAM or flash memory, for example, and stores files and update information, for example.

In the secondary storage 22, programs executed by the operation processor 21, as well as files, are stored. As a result of the operation processor 21 reading a program stored in the secondary storage 22, the terminal device 20 executes processing.

The operation processor 21, the secondary storage 22, and the communication unit 23 are connected to each other via a bus or a signal line.

The input unit 24 is a pointing device, for example, which is operated by a user to input information.

If the input unit 24 is a mouse, a user moves a cursor and clicks on a screen displayed on the display 25 with the mouse to specify a position on the screen, to specify an image displayed on the display 25, and to move the specified image.

If the input unit 24 is a touchscreen, a user touches the touchscreen with a finger to specify a position on a display screen on the display 25 and to specify an image on the display 25. The user may also move the finger on the touchscreen to shift a specified image.

A touchscreen may be provided in the terminal device 20. In this case, the input unit 24 and the display 25 are integrally provided.

Instead of the above-described pointing device, the input unit 24 may be a keyboard, which is used by a user to perform an input operation with keys.

A program to be executed by the CPU 21a of the terminal device 20 may be provided to the terminal device 20 while being stored in a computer readable recording medium, such as a magnetic recording medium (magnetic tape and a magnetic disk, for example), an optical recording medium (optical disc, for example), a magneto-optical disk, or a semiconductor memory. A program to be executed by the CPU 21a may be provided to the terminal device 20 via a communication medium, such as the internet.

### (Display Example on Display 25)

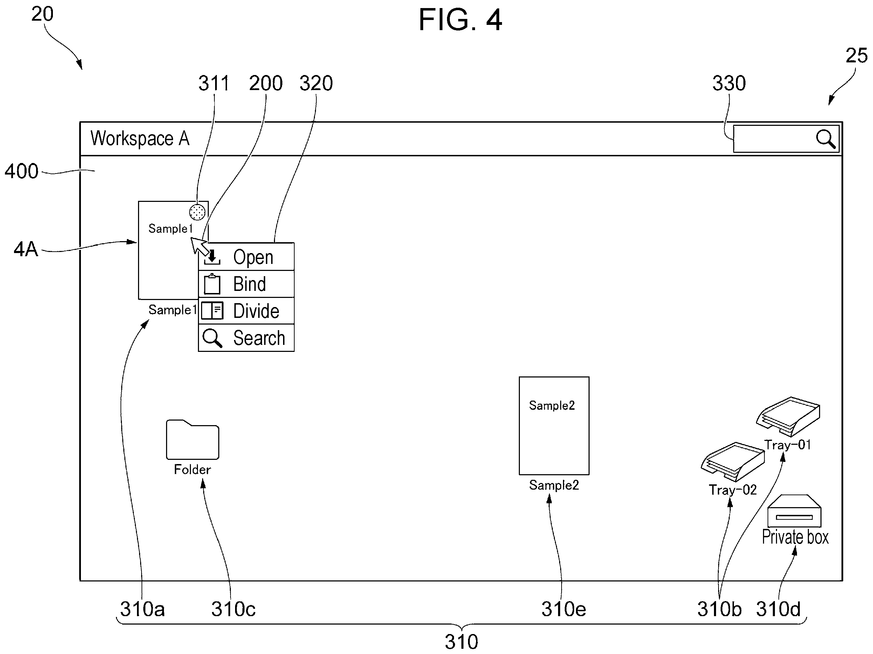

A display example on the display 25 of the terminal device 20 will be explained below with reference to Fig. 4.

In the exemplary embodiment, the CPU 11a (see Fig. 2), which is an example of the processor, of the server device 10 generates information used for controlling the displaying of the display 25. Then, the terminal device 20 performs display control in accordance with this information so that various screens, which will be discussed below, are displayed on the display 25 of the terminal device 20.

Instead of the server device 10, the terminal device 20 may generate information used for controlling the displaying of the display 25. Alternatively, the server device 10 may generate part of the information, and the terminal device 20 may generate another part of the information.

In the exemplary embodiment, as shown in Fig. 4, a workspace 400 implemented by file handling software is displayed on the display 25 of the terminal device 20. The file handling software is software that manages digitized files and facilitates unified management of paper and digital files.

On the display 25, a cursor 200, which indicates a user operation position, is displayed. As a user operates a mouse, the cursor 200 is moved. The user moves the cursor 200 to a desired position on the display 25 to select an element displayed on the display 25.

In the exemplary embodiment, multiple icons 310 are displayed on the workspace 400 on the display 25. An enlargement instruction image 311 is displayed on some icons 310 (only one icon 310 in the example in Fig. 4) to receive an instruction to enlarge the icon 310 from a user.

In the exemplary embodiment, when a user moves the cursor 200 onto such an icon 310, the enlargement instruction image 310 is displayed on the icon 310. When the cursor 200 is moved out of the icon 310, the enlargement instruction image 311 disappears.

In addition to the icons 310, a context menu 320 and a search window 330 are also displayed on the display 25.

The context menu 320 is an image for receiving an instruction from a user. In the exemplary embodiment, for example, when a user places the cursor 200 on an icon 310 and then right-clicks the mouse, the context menu 320 appears.

The context menu 320 includes plural options. In the exemplary embodiment, a user selects one of the options so that processing corresponding to the selected option is executed.

The search window 330 is an image for receiving a search instruction from a user.

In the exemplary embodiment, a user inputs a character string into the search window 330. When a character string is input into the search window 330, a search is conducted with the input character string through the files on the workspace 400 displayed on the display 25, for example.

A search range is not limited to the workspace 400 displayed on the display 25, and may also include another workspace 400 or include all files stored in the server device 10 or the terminal device 20.

The icon 310 is an image displayed for each element that can be selected by a user and is displayed on the display 25. The icon 310 may be a picture, a symbol, or character information and may also be called a thumbnail image.

In the display example in Fig. 4, a workspace A is displayed as the workspace 400, and multiple icons 310 are displayed on the workspace A.

In the exemplary embodiment, as icons 310, a first file icon 310a appended with a file name "Sample1" and a second file icon 310e appended with a file name "Sample2" are displayed.

On the workspace A, tray icons 310b associated with trays appended with tray names "Tray-01" and "Tray-02", a folder icon 310c associated with a folder, and a private box icon 310d associated with a private box are also displayed.

Each of the first file icon 310a and the second file icon 310e, which are examples of a file image, is an image associated with a file and representing this file.

The first file icon 310a and the second file icon 310e are each constituted by an image representing the content of the associated file with a picture, a symbol, or character information, for example.

If the file associated with each of the first file icon 310a and the second file icon 310e is image data, the image indicated by the image data, for example, is displayed in a reduced size as a file icon.

If the file associated with each of the first file icon 310a and the second file icon 310e is a document having multiple pages, the image of a representative page, such as the first page, of the document is displayed in a reduced size as a file icon.

The first file icon 310a and the second file icon 310e are each function as an icon for opening the associated file.

The tray icons 310b are each an icon associated with a tray in which a file is stored. A user selects a tray icon to select the corresponding tray.

The folder icon 310c is an icon associated with a folder in which a file is stored. A user selects the folder icon 310c to select the corresponding folder.

The private box icon 310d is an icon provided for an individual user who operates the terminal device 20. In the exemplary embodiment, a file provided from the third party to a user operating the terminal device 20 is stored in an information storage region associated with the private box icon 310d. The user selects the private box icon 310d to refer to a file stored in the information storage region.

The enlargement instruction image 311 is an image for receiving an instruction to display an enlarged image 360, which will be discussed later, from a user. In Fig. 4, the enlargement instruction image 311 is displayed on the first file icon 310a to indicate that it is related to the first file icon 310a.

The enlargement instruction image 311 displayed in Fig. 4 is an image for receiving from a user an instruction to display the enlarged image 360 associated with the first file icon 310a with the file name "Sample1".

In the exemplary embodiment, in response to a user selecting the enlargement instruction image 311, the enlarged image 360 associated with the first file icon 310a appended with this enlargement instruction image 311 is displayed in a display size larger than the first file icon 310a. This will be discussed later in detail.

In the exemplary embodiment, based on a user operation performed on the enlargement instruction image 311, an instruction to temporarily display the enlarged image 360 or an instruction to maintain the displaying of the enlarged image 360 is received.

In the exemplary embodiment, if a mouseover operation on the enlargement instruction image 311 is performed, it is received as an operation for temporarily displaying the enlarged image 360.

While the mouseover operation is continuously performed, the enlarged image 360 is being displayed. When the mouseover operation is discontinued, the enlarged image 360 disappears from the display 25.

In the exemplary embodiment, if a click operation on the enlargement instruction image 311 is performed, it is received as an operation for maintaining the displaying of the enlarged image 360.

With this click operation, even if the cursor 200 is moved out of the enlargement instruction image 311, the displaying of the enlarged image 360 is maintained.

To stop displaying the enlarged image 360, a user clicks the enlargement instruction image 311 once again. Then, the enlarged image 360 disappears from the display 25.

Alternatively, in response to a user performing a click operation while the cursor 200 is positioned outside the display region of the enlarged image 360, the enlarged image 360 may be erased from the display 25.

In the exemplary embodiment, the enlargement instruction image 311 is displayed on the top right corner of the first file icon 310a. The display size of the enlargement instruction image 311 is smaller than that of the first file icon 310a.

The enlargement instruction image 311 may be displayed as a translucent image, and a portion of the first file icon 310a behind the enlargement instruction image 311 may be seen through the enlargement instruction image 311.

The enlargement instruction image 311 may be displayed, not only on the first file icon 310a, but also on another icon, such as the second file icon 310e, the tray icons 310b, the folder icon 310c, and the private box icon 310d. In this case, the enlarged image 360 can be displayed for an icon appended with the enlargement instruction image 311.

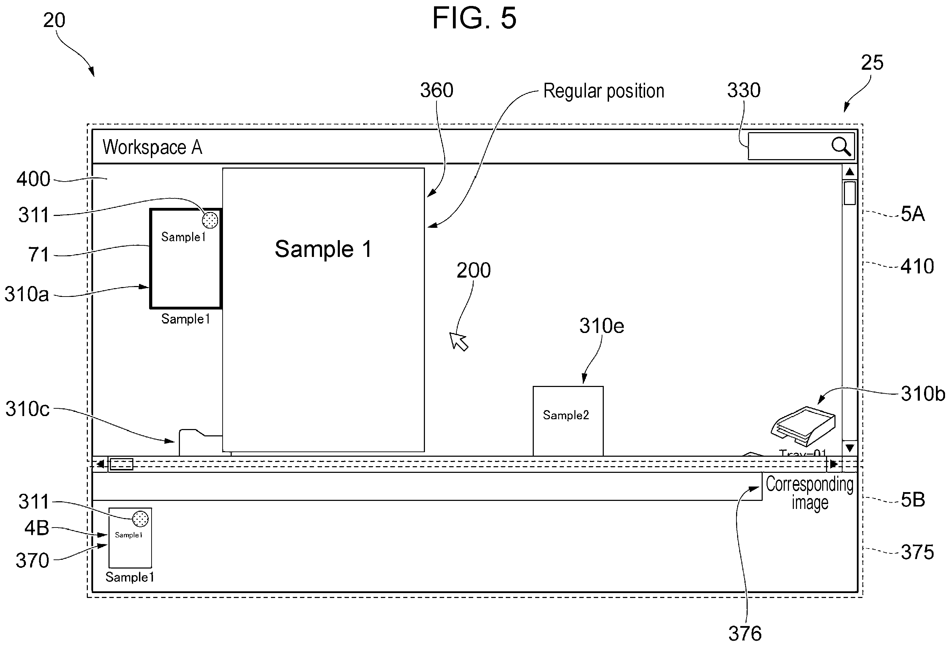

Fig. 5 illustrates a state of the display 25 when the enlargement instruction image 311 of the first file icon 310a is clicked.

In Fig. 5, as discussed above, the workspace A, which is an example of a display image, is displayed on the display 25, and the first file icon 310a, which is an example of a file image, and other icons are displayed on the workspace A.

In the exemplary embodiment, in response to a user selecting the first file icon 310a associated with "Sample1" included in the workspace A, the enlarged image 360 associated with the first file icon 310a and having a display size larger than the first file icon 310a is displayed on the display 25, as shown in Fig. 5.

More specifically, in the exemplary embodiment, when the enlargement instruction image 311 appended to the first file icon 310a is operated (clicked, for example), the enlarged image 360 having a display size larger than the first file icon 310a is displayed on the display 25.

"The display size is large" is synonymous with "the display area is large". Likewise, in the specification, when the display size is large, it means that the display area is large, and when the display size is small, it means that the display area is small.

In the exemplary embodiment, the enlarged image 360 is displayed at a position based on the position of the first file icon 310a. The position of the enlarged image 360 determined in this manner will be called a regular position.

More specifically, the enlarged image 360 is displayed close to the first file icon 310a. The enlarged image 360 is also displayed adjacent to the first file icon 310a. Between the left and right sides of the first file icon 310a, the enlarged image 360 is displayed on the side having a larger space.

In the exemplary embodiment, while the enlarged image 360 is being displayed in response to a user having selected the first file icon 310a, an image 71 is appended to the first file icon 310a to show that the first file icon 310a is being selected.

More specifically, to highlight the first file icon 310a, based on which the enlarged image 360 is displayed, a rectangular image 71 having a color in light blue or yellow, for example, is displayed to surround the first file icon 310a.

In this manner, in the exemplary embodiment, in response to a user operating (clicking, for example) the enlargement instruction image 311 appended to the first file icon 310a, the enlarged image 360 associated with the first file icon 310a and having a display size larger than the first file icon 310a is displayed.

In the exemplary embodiment, the shape of the first file icon 310a and that of the enlarged image 360 are formed to have similar figures.

The enlarged image 360 may be displayed in a different display mode. For example, the content different from that of the first file icon 310a may be displayed in the enlarged image 360. The shape of the enlarged image 360 and that of the first file icon 310a may not be formed to have similar figures.

In the exemplary embodiment, "enlarged image 360" is an image having a display size larger than the first file icon 310a.

In the exemplary embodiment, when the enlarged image 360 of the first file icon 310a is displayed, a corresponding image 370 is also displayed. In the exemplary embodiment, the corresponding image 370 is displayed at the bottom portion of the display 25.

The corresponding image 370 is the image of the file represented by the first file icon 310a, based on which the enlarged image 360 is displayed.

The corresponding image 370 is constituted by an image which indicates the content of the file represented by the first file icon 310a with a picture, a symbol, or character information. In the exemplary embodiment, the file name "Sample1" is indicated in the corresponding image 370.

The corresponding image 370 may be displayed as the same image as the first file icon 310a. Alternatively, at least one of the shape, display size, color, and content of the corresponding image 370 may be different from those of the first file icon 310a.

In the exemplary embodiment, the display size of the corresponding image 370 is smaller than that of the first file icon 310a.

In the exemplary embodiment, when the enlarged image 360 of the first file icon 310a is displayed, a corresponding image display region 375, which is a region for displaying the corresponding image 370, is displayed at the bottom portion of the display 25. The corresponding image 370 is displayed in the corresponding image display region 375.

The corresponding image display region 375 is displayed at a position lower than the workspace 400 and is displayed as a different region from the workspace 400.

The corresponding image display region 375 may be displayed at a position higher than the workspace 400 or on the left or right side of the workspace 400. The display position of the corresponding image display region 375 is not limited to a particular position.

In the exemplary embodiment, a workspace display region 410, which is a region where the workspace 400 is displayed, is provided. The corresponding image display region 375 is displayed as a different region from the workspace region 410.

In the exemplary embodiment, a rectangular region indicated by the broken lines 5A in Fig. 5 serves as the workspace display region 410, while a rectangular region indicated by the broken lines 5B in Fig. 5 serves as the corresponding image display region 375.

In the display example in Fig. 5, an instruction receiving image 376 is displayed to receive from a user an instruction regarding whether to display the corresponding image display region 375.

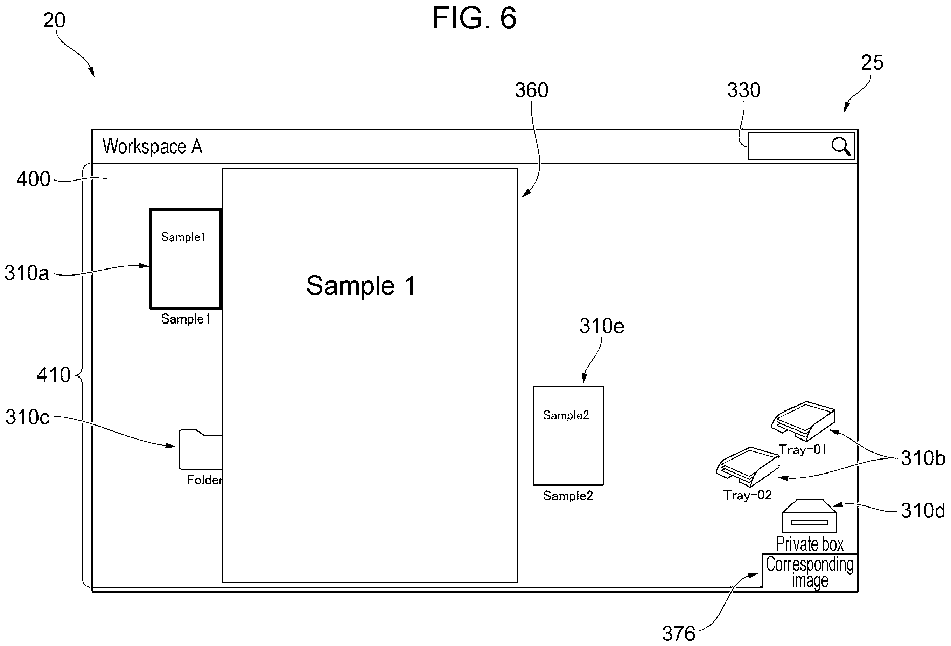

In the exemplary embodiment, when a user selects the instruction receiving image 376 in the state in Fig. 5, the corresponding image display region 375 disappears from the display 25, as shown in Fig. 6.

In this case, as shown in Fig. 6, the enlarged image 360 is further enlarged and extends to the area where the corresponding image display region 375 (see Fig. 5) is displayed.

When the user selects the instruction receiving image 376 in the state in Fig. 6, the display 25 returns to the display state in Fig. 5.

In the exemplary embodiment, the CPU 11a of the server device 10 performs control to display the corresponding image 370 at a portion of the display 25 outside the workspace display region 410 where the workspace 400 is displayed, as shown in Fig. 5.

As discussed above, in the exemplary embodiment, the corresponding image display region 375 is disposed separately from the workspace display region 410, and the corresponding image 370 is displayed at a position outside the workspace display region 410.

In the exemplary embodiment, in response to a display switching instruction from a user, the displaying of the workspace 400 is switched.

More specifically, an image (not shown) for switching the displaying of the workspace 400 is displayed on the display 25. A user operates this image to switch the displaying of the workspace 400.

In the exemplary embodiment, when the displaying of the workspace 400 is switched, the displaying of the workspace display region 410 is switched. As a result, another workspace 400, such as a workspace B, which will be discussed later, is displayed in the workspace display region 410.

The workspace 400 displayed in the workspace display region 410 is switched from the workspace A to the workspace B, for example. This means that, before the workspace B, which is an example of a first display image, is displayed, the workspace A, which is an example of a second display image, has been displayed.

In this manner, in the exemplary embodiment, even after the workspace A is switched to the workspace B, the displaying of the corresponding image display region 375 is maintained. In this case, the displaying of the corresponding image 370 is also maintained. This will be discussed later in detail.

The CPU 11a of the server device 10 performs control to maintain the displaying of the corresponding image 370 even when the workspace B is displayed as a result of switching the workspace 400.

More specifically, even when the workspace B is displayed, the CPU 11a of the server device 10 performs control to maintain the displaying of the corresponding image 370 of the first file icon 310a included in the workspace A, which has been displayed before the workspace B.

In other words, the CPU 11a of the server device 10 performs control to continuously display the corresponding image 370 of the first file icon 310a, which is selected by a user among the file icons in the workspace A, even when the workspace B is displayed.

This enables a user to display the enlarged image 360 based on the corresponding image 370. As a result, the enlarged image 360 based on the corresponding image 370 and another enlarged image 360, which is to be displayed in response to the user selecting a file icon on the workspace B, can be displayed together.

### (Files for which Corresponding Image is Displayed)

An example of a file for which the corresponding image 370 is displayed is a file for which the enlarged image 360 is displayed, as discussed above.

Another example of a file for which the corresponding image 370 is displayed is a file that is frequently referred to by a user. The corresponding image 370 of a file frequently referred to by a user may be displayed on the display 25.

To display the corresponding image 370 of a file frequency referred to by a user, the user reference degree is determined for each file. Then, among the files represented by the file icons included in the workspace A, for example, the CPU 11a of the server device 10 specifies a file whose user reference degree is greater than a predetermined threshold.

The CPU 11a then performs control to display the corresponding image 370 of this file on the display 25. More specifically, the CPU 11a performs control to display the corresponding image 370 in the corresponding image display region 375 (see Fig. 5).

The user reference degree is determined based on the display time of the enlarged image 360, for example. The user reference degree is determined based on the number of times the enlarged image 360 is displayed, for example.

The user reference degree may be determined based on the number of times a dedicated application program for opening a file is started. The user reference degree may be determined based on a period of time for which the file is being opened with this application program.

The CPU 11a of the server device 10 determines the user reference degree of a file, based on information on the period of the display time and information on the number of display times of this file, for example. If the determined user reference degree exceeds the predetermined threshold, the CPU 11a performs control to display the corresponding image 370 of this file in the corresponding image display region 375.

The user reference degree is determined for each file. The CPU 11a of the server device 10 performs control to display the corresponding image 370 of a file whose user reference degree exceeds the predetermined threshold.

It may be desirable that the user reference degree for a preset specific period be determined.

More specifically, it may be desirable that the user reference degree of a file during the latest period of time be determined and that the CPU 11a judge whether this user reference degree exceeds the predetermined threshold.

In this case, it is possible to prevent the user reference degree from being determined based on information on an older period of time.

Another example of a file for which the corresponding image 370 is displayed is a file directly selected by a user.

More specifically, when a user selects a specific file displayed on the workspace A, for example, the corresponding image 370 of this file is displayed.

To select a specific file, in one example, a user moves a file displayed on the workspace A (see Fig. 5) to the corresponding image display region 375, for example.

More specifically, the user moves a file displayed on the workspace A to the corresponding image display region 375 by a drag-and-drop operation, for example.

In response to this drag-and-drop operation, the CPU 11a of the server device 10 determines that the user has selected a specific file and performs control to display the corresponding image 370 of this file in the corresponding image display region 375.

To select a specific file, in another example, the user places the cursor 200 on a file displayed on the workspace A and then right-clicks the mouse to display plural options. The user then selects an option to select this file among the plural options.

In response to this operation, the CPU 11a of the server device 10 determines that the user has selected a specific file and performs control to display the corresponding image 370 of this file in the corresponding image display region 375.

In the above-described display example, in response to a user selecting the enlargement instruction image 311 (see Fig. 4), the enlarged image 360 (see Fig. 5) is displayed, and then, the corresponding image 370 is displayed.

Alternatively, in response to a user selecting a portion of the first file icon 310a other than the enlargement instruction image 311, the enlarged image 360 may be displayed, and then, the corresponding image 370 may be displayed.

To display the corresponding image 370 subsequent to the enlarged image 360, the enlarged image 360 may be first displayed and the corresponding image 370 may be then displayed, in response to a user selecting a portion other than the enlargement instruction image 311, instead of selecting the enlargement instruction image 311.

Another example of a file for which the corresponding image 370 is displayed is a file which is not allowed for another user to edit.

Another example of a file for which the corresponding image 370 is displayed is a file included in a private workspace (not shown) for an individual user.

In other words, an example of a file for which the corresponding image 370 is displayed is a file in a specific work area. A specific example of this type of file is a file stored in a private information storage region for an individual user.

Another example of a file for which the corresponding image 370 is displayed is a file stored in the information storage region associated with the private box icon 310d prepared for an individual user.

### (Displaying of Corresponding Image Display Region)

In the exemplary embodiment, when a predetermined condition is satisfied, the corresponding image display region 375 is displayed on the display 25.

In the exemplary embodiment, for example, when the predetermined condition is satisfied, the corresponding image 370 of the first file icon 310a included in the workspace A is displayed on the display 25.

More specifically, as discussed above, when a user operates (clicks, for example) the enlargement instruction image 311 to display the enlarged image 360, for example, the corresponding image display region 375 is displayed on the display 25.

In the exemplary embodiment, if there is a file frequently referred to by a user, the corresponding image display region 375 is displayed on the display 25.

Another example of the predetermined condition for displaying the corresponding image display region 375 is an instruction from a user.

With an instruction from a user, the corresponding image display region 375 may be displayed. Without an instruction from a user, the corresponding image display region 375 may not be displayed.

If an instruction to display the corresponding image display region 375 from a user is used as the predetermined condition, an option for providing such an instruction is included as one of the options to be displayed when the user right-clicks the mouse.

When the user selects this option, the corresponding image display region 375 is displayed.

In other words, the display mode of the display 25 is changed to a mode for displaying the corresponding image display region 375, such as a mode for displaying the option for providing an instruction to display the corresponding image display region 375.

When a user selects the mode for displaying the corresponding image display region 375 as the display mode of the display 25, the corresponding image display region 375 is displayed.

The corresponding image display region 375 may not necessarily be displayed based on an instruction from a user, but be displayed automatically.

For example, when a user selects the enlargement instruction image 311 to display the enlarged image 360 or when the user reference degree of a file becomes higher than the predetermined threshold, the corresponding image display region 375 may be displayed automatically.

In another example, the corresponding image display region 375 may be constantly displayed on the display 25.

In this case, if there is no corresponding image 370 to be displayed, the corresponding image display region 375 is displayed without any corresponding image 370. If there is a corresponding image 370 to be displayed, this corresponding image 370 is displayed in the corresponding image display region 375.

In the above-described example, the corresponding image display region 375 is provided separately from the workspace display region 410, as shown in Fig. 5.

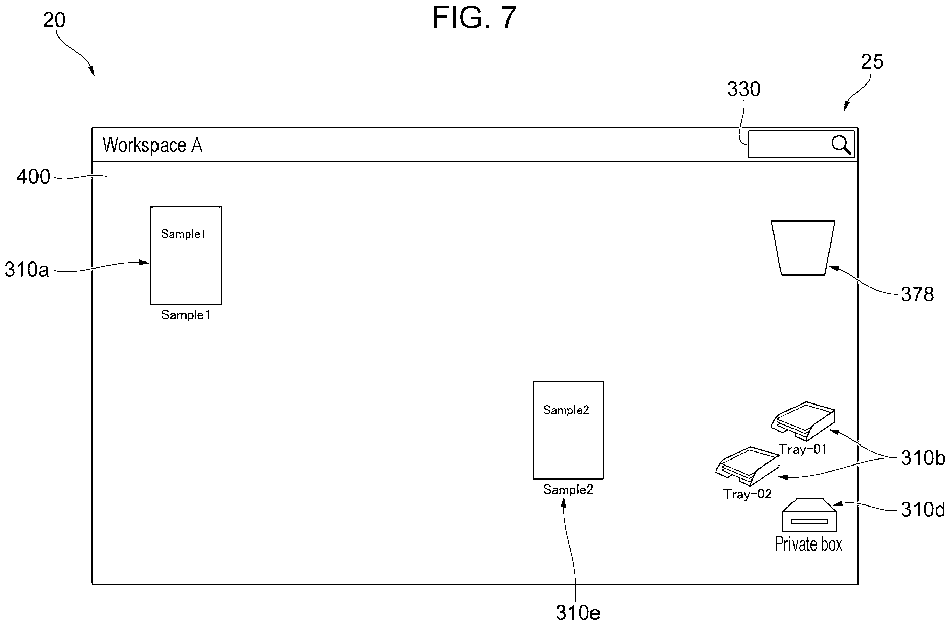

Alternatively, an instruction receiving image 378 for receiving an instruction to display a corresponding image 370 from a user may be displayed on the workspace 400, as shown in Fig. 7.

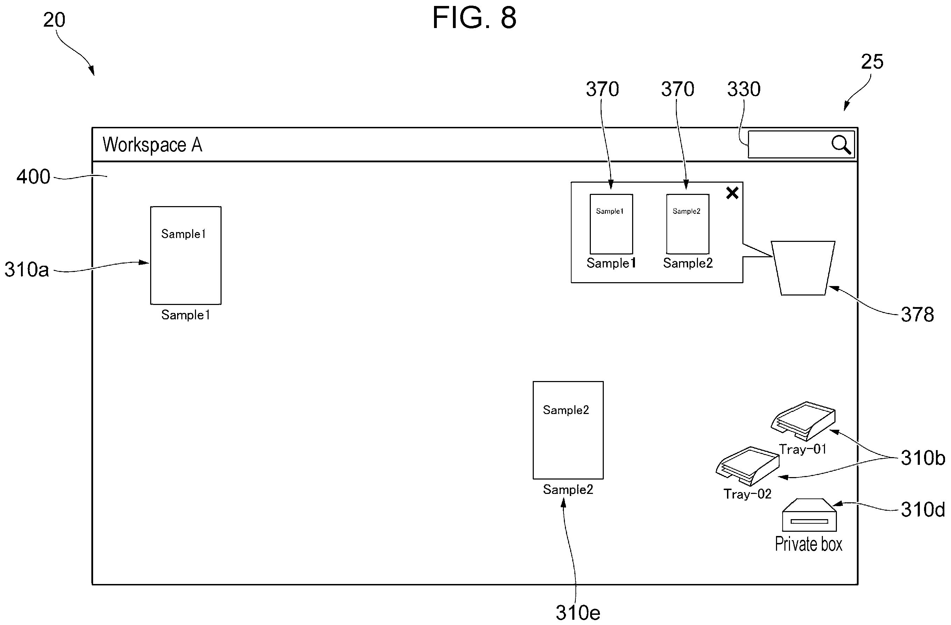

When a user selects the instruction receiving image 378, corresponding images 370 are displayed within the workspace A, as shown in Fig. 8. In the display example in Fig. 8, the instruction receiving image 378 is an icon.

To display a corresponding image 370 of a file included in the workspace A on the workspace B by using the instruction receiving image 378, a user first moves the first file icon 310a or the second file icon 310e on the workspace A shown in Fig. 7 to the display position of the instruction receiving image 378.

More specifically, the user moves the first file icon 310a or the second file icon 310e on the workspace A to the display position of the instruction receiving image 378 by a drag-and-drop operation.

In response to this drag-and-drop operation, the file represented by the first file icon 310a or the second file icon 310e is related to the instruction receiving image 378.

Then, when the user selects the instruction receiving image 378 (see Fig. 8) later, the corresponding image 370 of the file related to the instruction receiving image 378 is displayed, as discussed above.

The file to be related to the instruction receiving image 378 is not restricted to the above-described files. As discussed above, a file that satisfies a condition for displaying the corresponding image 370, such as a file for which the enlarged image 360 is displayed or a file whose user reference degree exceeds the predetermined threshold, may be related to the instruction receiving image 378.

With the use of the instruction receiving image 378, even after the workspace 400 displayed on the display 25 is switched to another workspace 400, the displaying of the instruction receiving image 378 is maintained.

If a user wishes to refer to a corresponding image 370 while another workspace 400 is displayed, he/she selects the instruction receiving image 378. Then, the corresponding image 370 linked to the instruction receiving image 378 is displayed on the display 25, as shown in Fig. 8.

When the user selects this corresponding image 370, the enlarged image 360 of the corresponding image 370 is displayed. This will be discussed later in detail.

### (Storing of Information on Corresponding Image)

In the exemplary embodiment, the CPU 11a of the server device 10 stores information on a file for which the corresponding image 370 is displayed. Hereinafter, such information will be called corresponding image file information. More specifically, the CPU 11a stores information for identifying an individual file for which the corresponding image 370 is displayed. The CPU 11a stores corresponding image file information for each file.

To display a corresponding image 370, based on the stored corresponding image file information, the CPU 11a specifies a file for which a corresponding image 370 is to be displayed and performs control to display the corresponding image 370 of this file on the display 25.

In the exemplary embodiment, a corresponding image 370 is generated for an individual file and is registered in the secondary storage 12 (see Fig. 2) of the server device 10.

To display a corresponding image 370, based on the stored corresponding image file information, the CPU 11a reads the corresponding image 370 associated with the corresponding image file information from the secondary storage 12.

The CPU 11a then outputs the read corresponding image 370 to the terminal device 20. The corresponding image 370 is thus displayed on the display 25 of the terminal device 20.

To display a corresponding image 370, the CPU 11a of the server device 10 may output the corresponding image file information to the terminal device 20.

In this case, based on the received corresponding image file information, the terminal device 20 obtains the corresponding image 370 registered in the secondary storage 22 (see Fig. 3) of the terminal device 20. Then, the corresponding image 370 is displayed on the display 25 of the terminal device 20.

The corresponding image file information stored in the CPU 11a of the server device 10 may be deleted at a predetermined specific timing.

For example, at a login timing or a logout timing, the corresponding image file information may be deleted.

The upper limit value (ten, for example) may be set for the number of items of corresponding image file information. If the number of items of corresponding image file information exceeds the upper limit value, the CPU 11a of the server device 10 may delete the exceeded items of corresponding image file information.

Additionally, even when the corresponding image file information of a file is obtained, if this file is deleted later, the corresponding image file information of this file may be deleted.

Regarding a file without a corresponding image 370, for example, if the corresponding image 370 of a file is not registered in the secondary storage 12 of the server device 10 or the secondary storage 22 of the terminal device 20, the server device 10 may not store the corresponding image file information of this file.

### (Corresponding Image)

In the exemplary embodiment, as discussed above, the first file icon 310a and the corresponding image 370 of the file represented by the first file icon 310a are displayed in a different manner.

More specifically, as shown in Fig. 5, the display size of the corresponding image 370 of the file represented by the first file icon 310a included in the workspace A is smaller than that of the first file icon 310a.

Additionally, in the exemplary embodiment, when a user places the cursor 200 on the corresponding image 370, the enlargement instruction image 311 is displayed for the corresponding image 370.

In the exemplary embodiment, the area ratio of the first file icon 310a to the enlargement instruction image 311 displayed for the first file icon 310a is different from the area ratio of the corresponding image 370 to the enlargement instruction image 311 displayed for the corresponding image 370.

More specifically, the area ratio of the corresponding image 370 to the enlargement instruction image 311 displayed for the corresponding image 370 is smaller than the area ratio of the first file icon 310a to the enlargement instruction image 311 displayed for the first file icon 310a.

In the display example in Fig. 5, the display size of the corresponding image 370 (denoted by 4B in Fig. 5), which is associated with the file represented by the first file icon 310a, is smaller than that of the first file icon 310a included in the workspace A.

Meanwhile, the display size of the enlargement instruction image 311 displayed for the first file icon 310a and that for the corresponding image 370 are almost the same.

In this case, as stated above, the area ratio of the corresponding image 370 to the enlargement instruction image 311 displayed for the corresponding image 370 becomes smaller than the area ratio of the first file icon 310a to the enlargement instruction image 311 displayed for the first file icon 310a.

In the specification, the area ratio of the first file icon 310a to the enlargement instruction image 311 displayed for the first file icon 310a is the value obtained by dividing the area of the first file icon 310a by that of the enlargement instruction image 311.

In the specification, the area ratio of the corresponding image 370 to the enlargement instruction image 311 displayed for the corresponding image 370 is the value obtained by dividing the area of the corresponding image 370 by that of the enlargement instruction image 311.

Alternatively, the display size of the first file icon 310a and that of the corresponding image 370 may be set to be the same, while the display size of the enlargement instruction image 311 displayed for the first file icon 310a and that for the corresponding image 370 may be set to be different from each other.

More specifically, for example, while the display size of the first file icon 310a and that of the corresponding image 370 may be set to be same, the display size of the enlargement instruction image 311 for the corresponding image 370 may be set to be larger than that of the enlargement instruction image 311 for the first file icon 310a.

### (Display State after Workspace Switching)

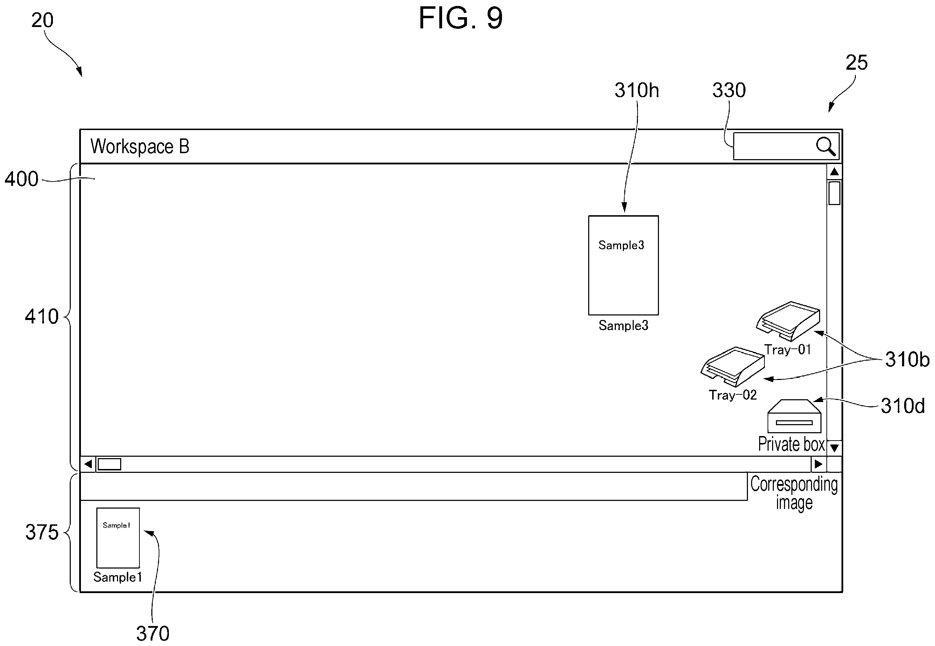

Fig. 9 illustrates a state of the display 25 after the workspace 400 is switched to another workspace 400.

In the exemplary embodiment, it is possible to switch between workspaces 400, as discussed above, and in the display example in Fig. 9, the workspace 400 is switched from the workspace A to the workspace B.

In the exemplary embodiment, the CPU 11a of the server device 10 switches a workspace 400 in response to an instruction from a user. Then, for example, the workspace B, which is an example of the first display image, including a third file icon 310h is displayed on the display 25 of the terminal device 20.

In the workspace B shown in Fig. 9, the third file icon 310h corresponding to a file "Sample3", which is different from the above-described files "Sample1" and "Sample2", is displayed.

In the exemplary embodiment, plural workspaces, such as the workspace A and the workspace B, can be displayed. For each of the workspace A and the workspace B, a file icon representing a file is displayed.

The CPU 11a of the server device 10 performs control to display on the display 25 a workspace 400, which is an example of a display image including a file icon (an image of a file). The CPU 11a also switches between workspaces 400 to be displayed on the display 25 in response to an instruction from a user.

As discussed above, the CPU 11a of the server device 10 performs control to display a workspace 400 in the workspace display region 410, which is a predetermined region of the display 25.

The CPU 11a switches the displaying of the workspace 400 in response to an instruction from a user. If the user instruction is to display the workspace B, which is another workspace 400, the CPU 11a performs control to display the workspace B in the workspace display region 410.

In the exemplary embodiment, even when the workspace 400 to be displayed is switched, the displaying of the corresponding image display region 375 and the corresponding image 370 is maintained.

In other words, the CPU 11a of the server device 10 performs control to continuously display on the display 25 the corresponding image 370 of the first file icon 310a included in the workspace A, which is an example of the second display image, while the workspace B, which is an example of the first display image, is being displayed on the display 25.

The CPU 11a also performs control to display the corresponding image 370 in a state in which a user can select it.

In response to the user selecting the corresponding image 370, the enlarged image 360 associated with the corresponding image 370 can be displayed. This will be discussed later in detail.

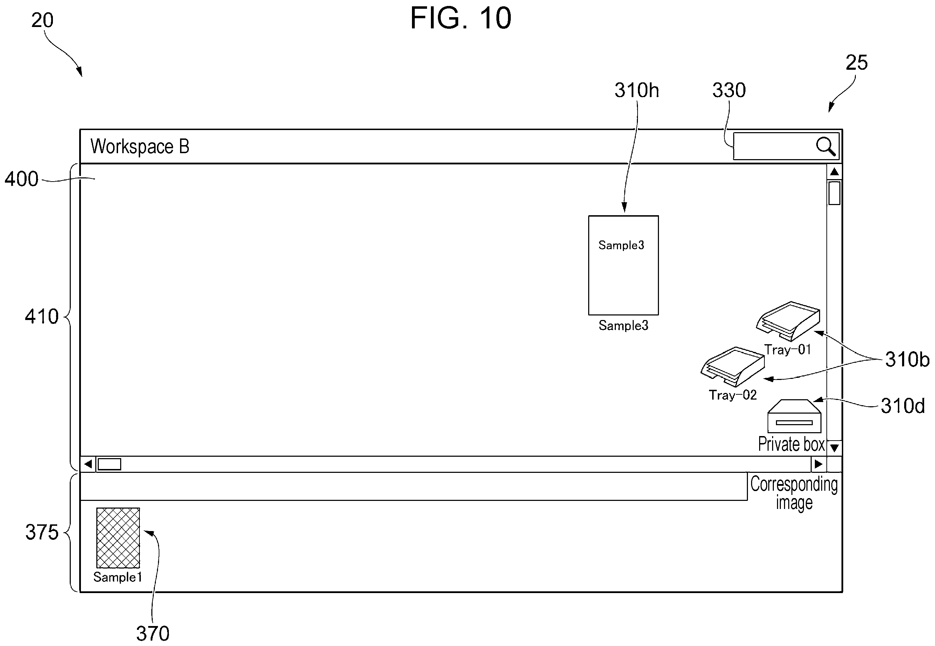

In the exemplary embodiment, among corresponding images 370 displayed in the corresponding image display region 375, only a file name, for example, may be displayed for a particular corresponding image 370, as shown in Fig. 10. For instance, only the file name of the corresponding image 370 of a file that a user is no longer authorized to access may be displayed.

More specifically, displaying only the file name for such a corresponding image 370 can prevent a user from identifying the content of the corresponding image 370.

Examples of a file that a user is no longer authorized to access are a deleted file and a file sent to the private box of another user.

### (Processing to be executed when a file icon on a workspace is first selected)

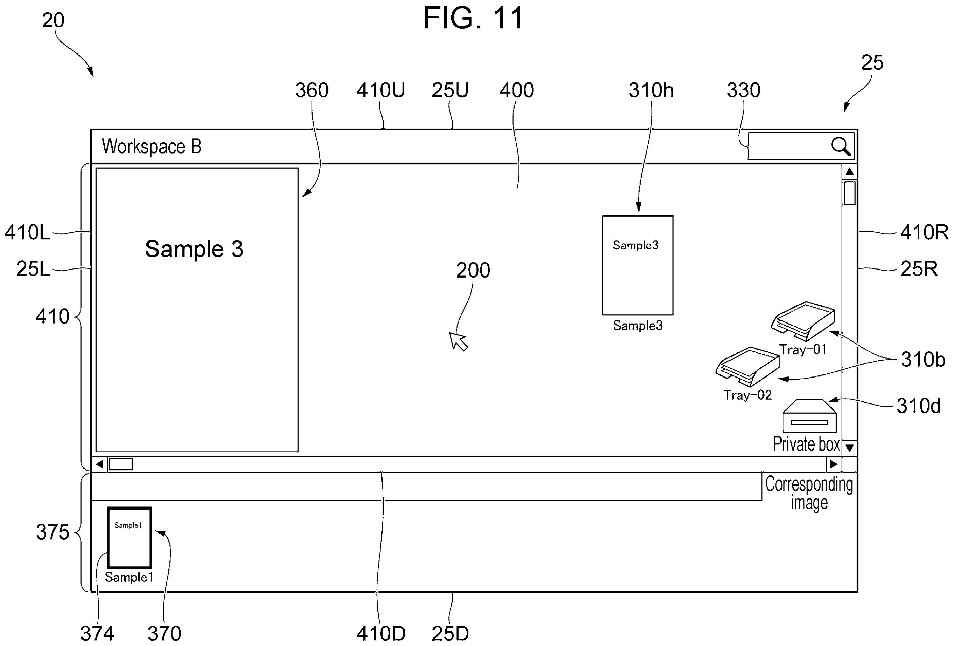

Fig. 11 illustrates a state of the display 25 when the third file icon 310h displayed on the workspace B shown in Fig. 9 is selected first before the corresponding image 370.

In other words, Fig. 11 illustrates a state of the display 25 when the third file icon 310h displayed after the workspace 400 is switched to the workspace B is selected first before the corresponding image 370.

In the exemplary embodiment, when the third file icon 310h displayed on the workspace B is selected, the enlarged image 360 corresponding to the third file icon 310h is displayed, as shown in Fig. 11.

When the corresponding image 370 is displayed as shown in Fig. 11, the enlarged image 360 is displayed at a preregistered display position.

In other words, in the exemplary embodiment, when the corresponding image 370 is displayed in the corresponding image display region 375, the enlarged image 360 to be displayed in response to the third file icon 310h being selected is displayed, not at the above-described regular position, but at the preregistered display position.

In this case, if no corresponding image 370 is displayed in the corresponding image display region 375, the enlarged image 360 may be displayed at the regular position.

In the exemplary embodiment, when the corresponding image 370 is displayed on the display 25, the enlarged image 360 to be displayed in response to the third file icon 310h being selected is displayed at the preregistered display position.

More specifically, in the exemplary embodiment, the preregistered display position is a position substantially aligned to at least one of the four sides of the display 25, which is formed in a rectangular shape. The enlarged image 360 is displayed to be substantially aligned to one of the four sides of the display 25.

The display 25 has four sides, that is, a top side 25U, a bottom side 25D, a left side 25L, and a right side 25R. In the exemplary embodiment, the preregistered display position is a position substantially aligned to the left side 25L.

The enlarged image 360 to be displayed in response to the third file icon 310h being selected is displayed to be substantially aligned to the left side 25L. With this display state, the enlarged image 360 is displayed at the left side of the display 25.

In the exemplary embodiment, the workspace display region 410 is also formed in a rectangular shape and has four sides, that is, a top side 410U, a bottom side 410D, a left side 410L, and a right side 410R. The enlarged image 360 is displayed to be substantially aligned to the left side 410L in the exemplary embodiment.

The enlarged image 360 may be displayed to be substantially aligned to two sides, such as the top side 25U and the left side 25L of the display 25 or the top side 410U and the left side 410L of the workspace display region 410. In this case, the enlarged image 360 is displayed at the top left corner of the display 25 or the workspace display region 410.

The initial display position of the enlarged image 360 may be the display position shown in Fig. 5. That is, the enlarged image 360 may be initially displayed at the regular position.

More specifically, the initial display position of the enlarged image 360 may be a position near the third file icon 310h (see Fig. 9). The enlarged image 360 may be displayed on one of the sides of the third file icon 310h having a larger space.

Then, when the corresponding image 370 (see Fig. 9) is selected or the cursor 200 is moved to the corresponding image display region 375, the enlarged image 360 may be shifted to the preregistered display position (see Fig. 11).

In the exemplary embodiment, when the corresponding image 370 is displayed on the display 25, the enlarged image 360 to be displayed in response to the third file icon 310h being selected is displayed at the preregistered display position. More specifically, the enlarged image 360 is displayed to be substantially aligned to the left side 25L of the display 25.

With this arrangement, a region where an enlarged image 360 (discussed later) is displayed in response to the corresponding image 370 being selected is formed at the right side of the enlarged image 360 displayed for the third file icon 310h.

The preregistered display position may be preset for each of the portrait display mode and the landscape display mode of the display 25.

The preregistered display position to be set when the display 25 is in the portrait display mode may be a position substantially aligned to the top side 25U of the display 25. In this case, a region where the enlarged image 360 is displayed in response to the corresponding image 370 being selected is formed below the enlarged image 360 displayed for the third file icon 360h.

The preregistered display position to be set when the display 25 is in the landscape display mode may be a position substantially aligned to the left side 25L of the display 25.

In this case, a region where the enlarged image 360 is displayed in response to the corresponding image 370 being selected is formed on the right side of the enlarged image 360 displayed for the third file icon 360h.

In this processing example, subsequent to the selection of the third file icon 310h, the user selects the corresponding image 370 displayed in the corresponding image display region 375.

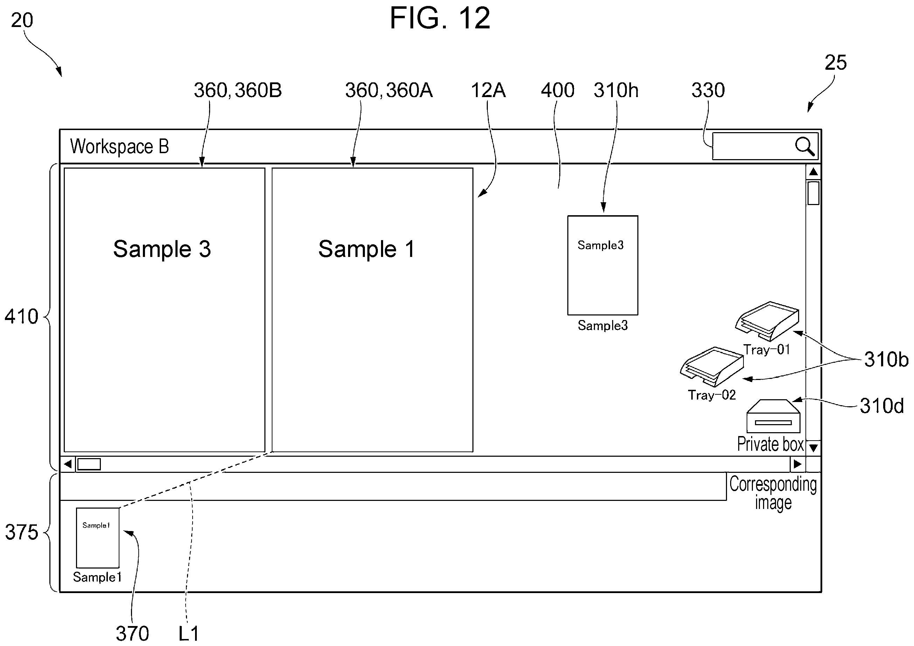

In response to the user selecting the corresponding image 370 in the state in Fig. 11, the CPU 11a of the server device 10 performs control to display the enlarged image 360 corresponding to the first file icon 310a (see Fig. 5), which is a file icon of the file associated with the corresponding image 370, as shown in Fig. 12.

In the exemplary embodiment, to select the corresponding image 370 (see Fig. 11), the user places the cursor 200 on the corresponding image 370. Then, the enlargement instruction image 311 (not shown in Fig. 11) is displayed on the corresponding image 370.

When the user clicks the enlargement instruction image 311, the enlarged image 360 of the corresponding image 370 is displayed on the right side of the enlarged image 360 of the third file icon 310h, which is already displayed on the display 25, as shown in Fig. 12.

In the exemplary embodiment, when the user places the cursor 200 on the corresponding image 370 (see Fig. 11), a color frame image 374 that surrounds the corresponding image 370 is displayed.

In the exemplary embodiment, to select the corresponding image 370 (see Fig. 11), the user first selects the enlargement instruction image 311 (not shown) displayed for the corresponding image 370.

Then, as discussed above, the enlarged image 360 (denoted by 12A in Fig. 12) of the first file icon 310a (see Fig. 5), which is a file icon of the corresponding image 370, is displayed on the display 25.

In the exemplary embodiment, as in the corresponding images 370, the enlarged images 360 are preregistered, and the CPU 11a of the server device 10 performs control to read the preregistered enlarged image 360 associated with a certain file icon and its corresponding image 370 and to display the read enlarged image 360 on the display 25.

More specifically, the CPU 11a of the server device 10 outputs the read enlarged image 360 to the terminal device 20. The enlarged image 360 is then displayed on the display 25 of the terminal device 20.

Alternatively, the CPU 11a may output information for identifying the enlarged image 360 to the terminal device 20. Based on this information, the terminal device 20 may read the enlarged image 360 stored in the terminal device 20. As a result, the enlarged image 360 is displayed on the display 25 of the terminal device 20.

In the exemplary embodiment, an example in which a preregistered enlarged image 360 and a preregistered corresponding image 370 are read and displayed is discussed.

However, every time an enlarged image 360 and a corresponding image 370 are displayed, an enlarged image 360 and a corresponding image 370 may be generated from information on the associated file, and then, the generated enlarged image 360 and corresponding image 370 may be displayed on the display 25.

In the exemplary embodiment, the CPU 11a of the server device 10 performs control to display the enlarged image 360 of the corresponding image 370 (hereinafter called a first enlarged image 360A) and the enlarged image 360 displayed in response to the third file icon 310h included in the workspace B being selected (hereinafter called a second enlarged image 360B) horizontally side by side, as shown in Fig. 12.

In other words, when the corresponding image 370 and the third file icon 310h on the workspace B are both selected, the CPU 11a of the server device 10 performs control so that the first enlarged image 360A associated with the corresponding image 370 and the second enlarged image 360B associated with the third file icon 310h are displayed horizontally side by side.

The CPU 11a performs control to display the first enlarged image 360A and the second enlarged image 360B without causing them to overlap each other.

The first enlarged image 360A and the second enlarged image 360B may be displayed in another mode. For example, the first enlarged image 360A and the second enlarged image 360B may be displayed such that they partially overlap each other.

If one of the first enlarged image 360A and the second enlarged image 360B is placed entirely behind the other, it is not possible to compare the two images.

In contrast, if the first enlarged image 360A and the second enlarged image 360B are displayed to partially overlap each other, it is possible to compare at least part of the first enlarged image 360A and that of the second enlarged image 360B.

In the above-described example, as shown in Fig. 12, the first enlarged image 360A of the corresponding image 370 and the second enlarged image 360B of the third file icon 310h are displayed horizontally side by side.

However, the first enlarged image 360A and the second enlarged image 360B may be displayed in a different manner. For example, if the display 25 is set in the portrait display mode, the first enlarged image 360A and the second enlarged image 360B may be displayed vertically side by side.

In another example, information that the corresponding image 370 and the first enlarged image 360A are associated with each other may be displayed on the display 25.

In this case, even if plural corresponding images 370 are displayed in the corresponding image display region 375, it is possible to clarify which corresponding image 370 is associated with the first enlarged image 360A.

As the information that the corresponding image 370 and the first enlarged image 360A are associated with each other, the corresponding image 370 and the first enlarged image 360A may be linked by a line L1, as shown in Fig. 12. The line L1 may be either one of a straight line and a curve.

In another example, the corresponding image 370 and the first enlarged image 360A may be displayed in the same color. In this case, it may be desirable that a frame surrounding the corresponding image 370 and that surrounding the first enlarged image 360A be displayed and be indicated in the same color.

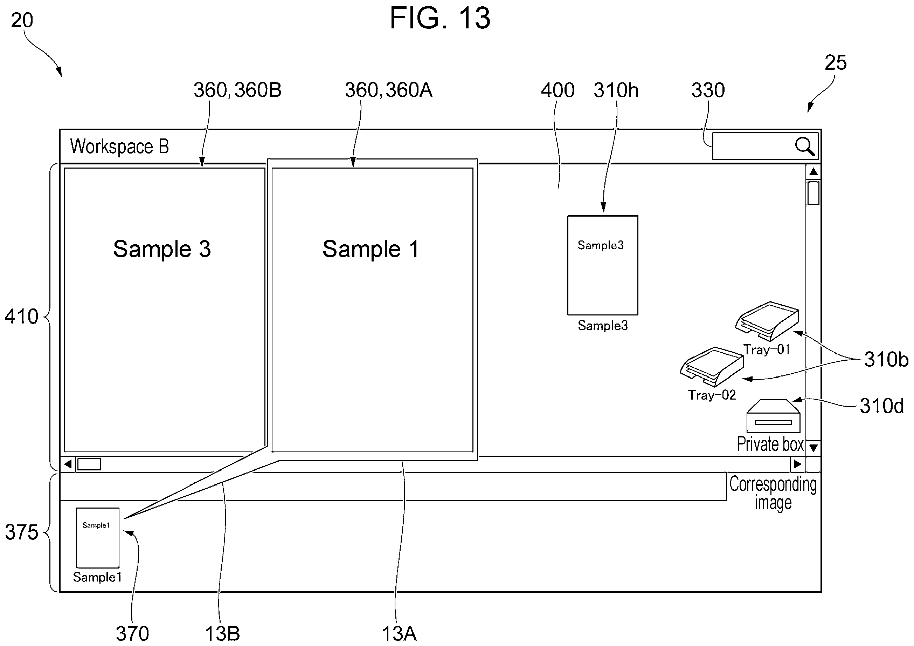

In another example, a type of balloon or bubble may be used to indicate that the corresponding image 370 and the first enlarged image 360A are associated with each other. For example, as shown in Fig. 13, a frame 13A surrounding the first enlarged image 360A is displayed, and an image 13B extending from the frame 13A to the corresponding image 370 is displayed.

In another example, animation is used to indicate that the corresponding image 370 and the first enlarged image 360A are associated with each other. For example, video showing that the corresponding image 370 is gradually enlarged to finally become the first enlarged image 360A may be displayed.

In the exemplary embodiment, as discussed above, in response to a user selecting the enlargement instruction image 311 displayed for a file icon or that for a corresponding image 370, the enlarged image 360 is displayed.

The enlargement instruction image 311 may not necessarily be displayed. Instead, when the cursor 200 is placed on a file icon or a corresponding image 370, the enlarged image 360 may be displayed.

Additionally, the enlarged image 360 corresponding to a file icon is displayed to be substantially aligned to the left side of the display 25. Initially, however, the enlarged image 360 for a file icon may be displayed at the regular position.

Then, when the corresponding image 370 is selected or the cursor 200 is placed within the corresponding image display region 375, the enlarged image 360 may be shifted to the left side of the display 25.

As stated above, the first enlarged image 360A and the second enlarged image 360B may be displayed vertically side by side, instead of being displayed horizontally side by side.

It may be first determined whether the display 25 is in the portrait display mode or in the landscape display mode. Then, depending on the orientation of the display 25, it may be determined whether to display the first enlarged image 360A and the second enlarged image 360B horizontally side by side or vertically side by side.

In the above-described example, the corresponding image file information is obtained, and when the file for which the corresponding image 370 is to be displayed is specified, the corresponding image display region 375 is automatically displayed.

More specifically, in the exemplary embodiment, as shown in Fig. 5, when a predetermined condition is satisfied and the corresponding image 370 can be displayed, the corresponding image display region 375 is automatically displayed.

Alternatively, even when the corresponding image file information is obtained, the corresponding image display region 375 may not automatically be displayed. Instead, when another predetermined condition is satisfied, the corresponding image display region 375 may be displayed.

For example, after the corresponding image file information is obtained, in response to an instruction to display the corresponding image display region 375 from a user, the corresponding image display region 375 may be displayed.

More specifically, in one example, when the user selects an option for providing an instruction to display enlarged images 360 side by side, the corresponding image display region 375 may be displayed.

In another example, when the user selects an option "display corresponding image", the corresponding image display region 375 may be displayed.

In the exemplary embodiment, as discussed above, in response to the enlargement instruction image 311 appended to the corresponding image 370 being selected, the first enlarged image 360A, which is the enlarged image 360 of the corresponding image 370, is displayed.

As stated above, however, the enlargement instruction image 311 may not necessarily be displayed.

If the enlargement instruction image 311 is not displayed, in response to a user selecting a certain corresponding image 370, for example, the first enlarged image 360A is displayed. In this case, the entirety of the corresponding image 370 serves as the enlargement instruction image 311.

A file icon may be treated in a similar manner. The entirety of a file icon may function as the enlargement instruction image 311, and in response to a user selecting a certain file icon, the second enlarged image 360B may be displayed.

In the exemplary embodiment, when displaying an enlarged image 360, the enlarged image 360 based on the latest file is displayed.

More specifically, regarding the second enlarged image 360B associated with the third file icon 310h in the workspace B (see Fig. 12) and the first enlarged image 360A associated with the corresponding image 370, the enlarged images 310 based on the latest files are displayed.

A user may be asked about whether to display an enlarged image 360 based on an older version. If the user wishes to do so, the enlarged image 360 based on the older version may be displayed.

In the exemplary embodiment, in accordance with whether the corresponding image display region 375 is displayed, the CPU 11a of the server device 10 executes processing differently for determining the display position of the second enlarged image 360B to be displayed in response to a user selecting the third file icon 310h in the workspace B (see Fig. 12).

In other words, in accordance with whether a corresponding image 370 is displayed on the display 25, the CPU 11a of the server device 10 executes processing differently for determining the display position of the second enlarged image 360B to be displayed in response to a user selecting the third file icon 310h.

More specifically, the CPU 11a executes processing differently for determining the display position of the second enlarged image 360B associated with the third file icon 310h in accordance with whether the third file icon 310h is selected in a state in which no corresponding image 370 is displayed on the display 25 or the third file icon 310h is selected in a state in which a corresponding image 370 is displayed on the display 25.

If the third file icon 310h is selected in the state in which no corresponding image 370 is displayed on the display 25, the CPU 11a determines the display position of the second enlarged image 360B, based on the position of the third file icon 310h.

More specifically, the CPU 11a determines the display position of the second enlarged image 360B to be the above-described regular position.

In contrast, if the third file icon 310h is selected in the state in which a corresponding image 370 is displayed on the display 25, the CPU 11a determines the display position of the second enlarged image 360B to be the above-described preregistered display position.

In this case, as stated above, the second enlarged image 360B is displayed to be substantially aligned to one of the four sides of the display 25.

More specifically, if the third file icon 310h is selected in the state in which no corresponding image 370 is displayed on the display 25, the CPU 11a determines the display position of the second enlarged image 360B to be a portion adjacent to the third file icon 310h, as explained with reference to Fig. 5.

In this case, the CPU 11a determines the display position of the second enlarged image 360B to be a portion adjacent to the third file icon 310h and on one of the left and right sides of the third file icon 310h having a larger space.

In contrast, if the third file icon 310h is selected in the state in which a corresponding image 370 is displayed on the display 25, the CPU 11a determines the display position of the second enlarged image 360B to be the above-described preregistered display position.

More specifically, the CPU 11a of the server device 10 determines the display position of the second enlarged image 360B to be a position substantially aligned to at least one of the four sides of the rectangular display 25, as shown in Fig. 11.

If the third file icon 310h is selected in the state in which a corresponding image 370 is displayed on the display 25, it is likely that the corresponding image 370 will be selected later to display the first enlarged image 360A associated with the corresponding image 370.

In the exemplary embodiment, therefore, the second enlarged image 360B associated with the third file icon 310h is displayed to be substantially aligned to one side of the display 25.

If the third file icon 310h is selected in the state in which no corresponding image 370 is displayed on the display 25, it is likely that the user will only refer to the enlarged image 360 associated with the third file icon 310h.

In this case, based on the position of the third file icon 310h, the enlarged image 360 is displayed on one of the sides of the third file icon 310h having a larger space, as stated above.

As the state in which no corresponding image 370 is displayed on the display 25, two types of states can be considered. One type of the state is a state in which the corresponding image display region 375 is not displayed. The other type of the state is a state in which the corresponding image display region 375 is displayed but does not contain any corresponding image 370.

If a user has selected the third file icon 310h on the workspace B in the other type of the state, the display position of the second enlarged image 360B may be set to be the preregistered display position.

In this case, although no corresponding image 370 is displayed, the corresponding image display region 375 is displayed. The above-described preregistered display position may thus be used as the display position of the second enlarged image 360B.

As stated above, even when a corresponding image 370 is displayed, an enlarged image 360 may be displayed at the regular position until the corresponding image 370 is selected or until the cursor 200 is moved to the corresponding image display region 375.

When a user first selects the third file icon 310h on the workspace B, this may mean that the user wishes to only refer to the enlarged image 360 associated with the third file icon 310h or that the user wishes to refer to both of this enlarged image 360 and the enlarged image 360 associated with the corresponding image 370.

Accordingly, when the third file icon 310h on the workspace B is first selected, the enlarged image 360 associated with the third file icon 310h may be initially displayed at the regular position.

Then, if a certain condition is satisfied, such as if a corresponding image 370 on the display 25 is selected, the enlarged image 360 at the regular position may be shifted to an edge of the display 25.

As described above, in the exemplary embodiment, while the workspace B is being displayed on the display 25, the enlarged image 360 of a file which has been displayed on the workspace A can also be displayed on the display 25.

This makes it possible to display enlarged images 360 associated with files stored in different locations, such as a file displayed on the workspace A and a file displayed on the workspace B, on the same display screen.

In this manner, in the exemplary embodiment, two enlarged images 360 are displayed on the same display screen on the display 25.

To display two enlarged images 360 on the same display screen, information on files displayed on one workspace 400 is first stored. Then, based on this stored information, a file to be displayed on the display 25 while another workspace 400 is displayed on the display 25 is specified. Then, the enlarged image 360 associated with the specified file is displayed on the display 25.

This enlarged image 360 of the specified file and the enlarged image 360 associated with a file in the other workspace 400 are displayed side by side.

In this manner, in one of the display modes of the exemplary embodiment, multiple enlarged images 360 are displayed together side by side. Hereinafter such a display mode will be called a multiple display mode.

The display state of the display 25 shifts to the multiple display mode at a timing at which the corresponding image file information is obtained.

In other words, the display state of the display 25 shifts to the multiple display mode when a predetermined condition is satisfied, such as when the enlarged image 360 (see Fig. 5) associated with the first file icon 310a is displayed or when the user reference degree of a file exceeds the predetermined threshold.

The display state of the display 25 also shifts to the multiple display mode in response to a user instruction to shift to the multiple display mode.

The multiple display mode is canceled when the corresponding image file information becomes no longer stored in the terminal device 20, such as when the corresponding image file information is deleted.

The multiple display mode is also canceled at a logout timing or in response to an instruction from a user, for example.

When the multiple display mode is canceled, even if a file displayed on the workspace B is selected, the enlarged image 360 associated with this file is not displayed at a position close to an edge of the display 25, but is displayed adjacent to the file icon and on one of the sides of the file icon having a larger space, as explained with reference to Fig. 5.

In other words, when the multiple display mode is not employed, the enlarged image 360 of a file displayed on the workspace B is displayed at the regular position.

In the exemplary embodiment, as shown in Fig. 12, enlarged images 360, such as the first enlarged image 360A and the second enlarged image 360B, are displayed within the workspace display region 410.

This can avoid the enlarged images 360 from overlapping the corresponding image display region 375. That is, no corresponding image 370 is located behind the enlarged images 360.

In the exemplary embodiment, there are two types of enlarged images: one is an enlarged image 360 displayed upon selecting a corresponding image 370, such as the first enlarged image 360A, and the other is an enlarged image 360 displayed upon selecting the third file icon 310h in a workspace 400, such as the second enlarged image 360B.

These two types of enlarged images 360 are both displayed within the workspace display region 410.

In the exemplary embodiment, a user is not allowed to perform any operation, such as editing, on the first enlarged image 360A displayed upon selecting a corresponding image 370, but can only view the first enlarged image 360A.

In contrast, a menu bar, such as the context menu 320 shown in Fig. 4, may be displayed for the first enlarged image 360A. In other words, a user may be allowed to edit the file represented by the first enlarged image 360A.

Among the files represented by the corresponding images 370, there may be a file that a user is no longer authorized to access. In the exemplary embodiment, even if the user selects the corresponding image 370 associated with this file, the enlarged image 360 is not displayed.

For a file that a user has deleted, too, even if the user selects the corresponding image 370 associated with this file, the enlarged image 360 is not displayed.

In the exemplary embodiment, a user is able to delete a corresponding image 370 displayed in the corresponding image display region 375.

To make it possible for a user to delete a corresponding image 370, an option for deleting a corresponding image 370 is included as one of the options to be displayed when the user right-clicks the mouse while the cursor 200 is placed on the corresponding image 370. When the user selects this option, the corresponding image 370 is deleted.

Examples of the corresponding images 370 that the user can delete in this manner are a corresponding image 370 for which the user does not wish to display an enlarged image 360, a corresponding image 370 associated with a deleted file, and a corresponding image 370 associated with a file that the user is no longer authorized to access.

### (Processing to be executed when a corresponding image is first selected)

Processing to be executed when a user selects a corresponding image 370 first before the third file icon 310h on the workspace B will be discussed below.

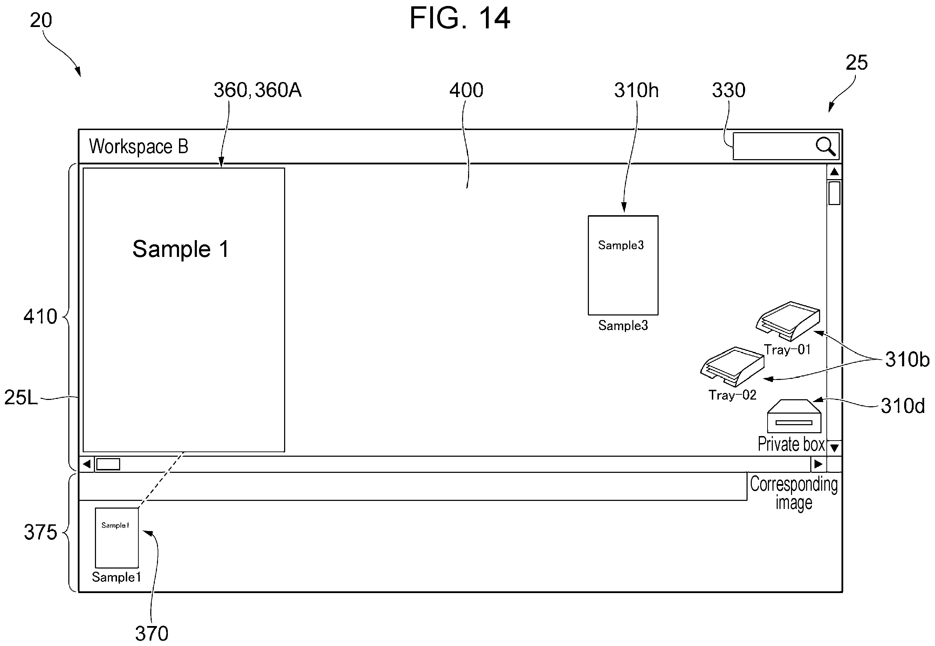

When a corresponding image 370 is selected first, the CPU 11a of the server device 10 performs control to display the first enlarged image 360A associated with this selected corresponding image 370, as shown in Fig. 14.

More specifically, in response to a user selecting the corresponding image 370, the CPU 11a of the server device 10 performs control to display on the display 25 the first enlarged image 360A having a display size larger than the first file icon 310a included in the workspace A (see Fig. 5) .

In the exemplary embodiment, the corresponding image 370 can be regarded as a file image, which is an image associated with a file and displayed on the display 25.

In other words, not only a file icon displayed on a workspace 400, but also the corresponding image 370 is an image representing a file and can be regarded as a file image associated with a file.

In the exemplary embodiment, when the corresponding image 370, which is also an example of a file image, is selected first, the CPU 11a of the server device 10 performs control to display on the display 25 the first enlarged image 360A associated with the corresponding image 370 and having a display size larger than the corresponding image 370, as shown in Fig. 14.

More specifically, the CPU 11a performs control to display the first enlarged image 360A to be substantially aligned to the left side 25L of the display 25. As stated above, the display size of the first enlarged image 360A associated with the corresponding image 370 is larger than that of the first file icon 310a (see Fig 5), which is a file icon of a file represented by the corresponding image 370.

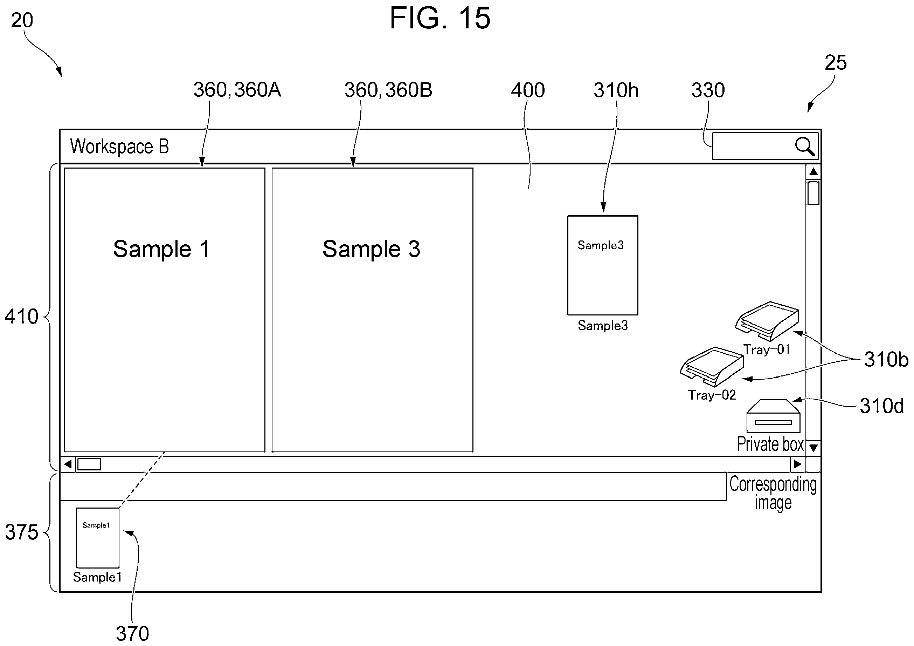

In this processing example, after selecting the corresponding image 370, a user selects the third file icon 310h on the workspace B (see Fig. 14). Then, the second enlarged image 360B associated with the third file icon 310h is displayed on the display 25, as shown in Fig. 15.

More specifically, the second enlarged image 360B is displayed at a preregistered display position.

The preregistered display position in this case is a position on the right side of the first enlarged image 360A associated with the corresponding image 370, and the second enlarged image 360B associated with the third file icon 310h is displayed on the right side of the first enlarged image 360A.

In other words, the second enlarged image 360B is displayed closer to the center of the display 25 than the first enlarged image 360A is.

As a result, the two enlarged images 360 are displayed side by side.

If the user selects the corresponding image 370 first, it is highly likely that the user wishes to display plural enlarged images 360 and to compare them with each other.

In the exemplary embodiment, therefore, when the corresponding image 370 is selected first, the first enlarged image 360A is displayed to be substantially aligned to the left side 25L of the display 25. In other words, the first enlarged image 360A is displayed to be substantially aligned to an edge of the display 25.

After selecting the corresponding image 370, the user selects the third file icon 310h. In the exemplary embodiment, in response to the user selecting the third file icon 310h, the second enlarged image 360B is displayed on the right side of the first enlarged image 360A.

As a result, the two enlarged images 360 are displayed side by side.

In the exemplary embodiment, it may be possible that the third file icon 310h be located behind the first enlarged image 360A displayed in response to the corresponding image 370 being selected.

In the display example in Fig. 14, since the third file icon 310h is positioned on the right side of the display 25, although the first enlarged image 360A is displayed, the third file icon 310h is not hidden behind the first enlarged image 360A.

In contrast, if the third file icon 310h is displayed on the left side of the display 25, it may be hidden behind the first enlarged image 360A. In this case, a user is unable to select the third file icon 310h.

In the exemplary embodiment, if the third file icon 310h is located behind the first enlarged image 360A and if a predetermined condition is satisfied, information on the third file icon 310h is displayed on the display 25.

More specifically, the CPU 11a of the server device 10 performs control to display information on the third file icon 310h on the display 25 if the third file icon 310h is located behind the first enlarged image 360A and if a predetermined condition is satisfied.

The third file icon 310h positioned behind the first enlarged image 360A can be regarded as a background image, which is an image behind the first enlarged image 360A. In the exemplary embodiment, information on a background image (hereinafter called background image information 95) is displayed on the display 25.

The CPU 11a of the server device 10 performs control to display the background image information 95 in a state in which a user can select it.

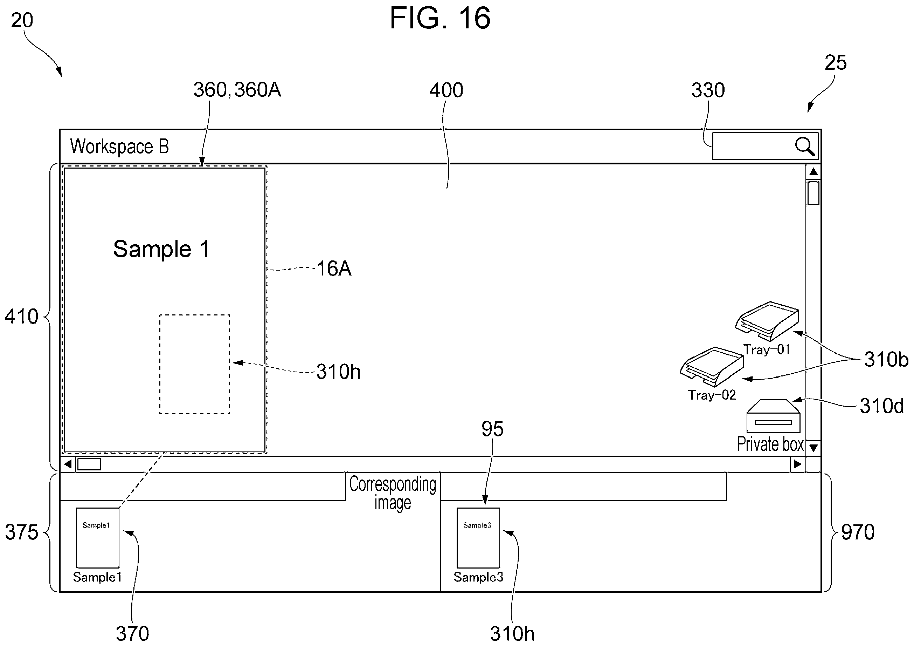

This will be discussed more specifically with reference to Fig. 16. In the exemplary embodiment, it may be possible that the third file icon 310h on the workspace B be located behind the first enlarged image 360A displayed in response to the corresponding image 370 being selected. In this case, information on the third file icon 310h is displayed on the display 25 as the background image information 95.

More specifically, in the exemplary embodiment, as the background image information 95, a third file icon 310h is displayed. The display size of this third file icon 310h displayed as the background image information 95 is smaller than that of the third file icon 310h displayed on the workspace B.

This enables a user to select the third file icon 310h by selecting the background image information 95 even when the third file icon 310h on the workspace B is positioned behind the first enlarged image 360A.

In the exemplary embodiment, when the third file icon 310h displayed as the background image information 95 is selected, the second enlarged image 360B corresponding to this third file icon 310h is displayed, as in the case shown in Fig. 15.

More specifically, the second enlarged image 360B is displayed on the right side of the first enlarged image 360A. As a result, the two enlarged images 360 are displayed side by side.

In the exemplary embodiment, when a user first selects the third file icon 310h on the workspace 400, the second enlarged image 360B is displayed. In this case, there is no possibility that the corresponding image 370 that may be subsequently selected by the user be located behind the second enlarged image 360B.

In contrast, when the user first selects the corresponding image 370, the third file icon 310h that may be subsequently selected by the user may be positioned behind the first enlarged image 360A displayed for the corresponding image 370.

To address this issue, in the exemplary embodiment, when the third file icon 310h on the workspace B is located behind the first enlarged image 360A, information on the third file icon 310h is displayed in a state in which a user can select it.

This enables the user to select the file associated with the third file icon 310h and accordingly to display the enlarged image 360 corresponding to this file.

When the first enlarged image 360A associated with the corresponding image 370 is displayed, the CPU 11a of the server device 10 determines whether a file icon is positioned behind the first enlarged image 360A.

To make this determination, for example, the CPU 11a first identifies the position of the centroid of a file icon on the workspace B and then judges whether the position of the centroid is within the display region of the first enlarged image 360A.

Then, if the CPU 11a has judged that the position of the centroid is within the display region of the first enlarged image 360A, it determines that the file icon is positioned behind the first enlarged image 360A.

The CPU 11a then performs control to display information on this file icon, that is, the background image information 95, on the display 25.

If, for example, part of the file icon and part of the display region of the first enlarged image 360A overlap each other, the CPU 11a may perform control to display information on this file icon. In this case, even if the position of the centroid of the file icon is outside the display region of the first enlarged image 360A, information on the file icon is displayed on the display 25.

In the exemplary embodiment, if plural file icons are positioned behind the first enlarged image 360A, information on each of the file icons is displayed, that is, plural items of information on the file icons are displayed.

In the display example in Fig. 16, the background image information 95 is displayed outside the workspace display region 410.

In the exemplary embodiment, a background image information display region 970, which is a region for displaying the background image information 95, is separately provided from the workspace display region 410, and the background image information 95 is displayed in the background image information display region 970.

In the exemplary embodiment, the background image information 95 is displayed outside the display region where an enlarged image 360 is displayed.

In Fig. 16, a rectangular region indicated by the broken lines 16A is a display region where an enlarged image 360 is displayed. The background image information 95 is displayed outside this display region.

Additionally, in the exemplary embodiment, the background image information display region 970 is separately provided from the corresponding image display region 375, and the background image information 95 is displayed in a region different from the corresponding image display region 375.

In the exemplary embodiment, as the background image information 95, an icon is displayed. In this icon, a file name of the file represented by the icon is included. In the example in Fig. 16, the file name is "Sample3".

The background image information 95 is not limited to an icon and may be any form from which a user can recognize the file. For example, the background image information 95 may be displayed in a text format.

In the exemplary embodiment, when the display mode of the display 25 is a specific mode, the background image information 95 is displayed.

In the exemplary embodiment, when the display mode is a mode in which two enlarged images 360 are displayed side by side as described above, the CPU 11a of the server device 10 performs control to display the background image information 95.

More specifically, when the display mode is a mode in which the first enlarged image 360A associated with the corresponding image 370 and the second enlarged image 360B associated with the third file icon 310h are displayed with a predetermined positional relationship, the CPU 11a of the server device 10 performs control to display the background image information 95 on the display 25.

To put it more specifically, for example, when the display mode is a mode in which the first enlarged image 360A and the second enlarged image 360B are displayed side by side without overlapping each other, the CPU 11a performs control to display the background image information 95 on the display 25.

In the exemplary embodiment, when the display mode is a mode, for example, in which the first enlarged image 360A, which is first selected by a user, is displayed closer to an edge of the display 25 than the second enlarged image 360B is and the second enlarged image 360B is displayed closer to the center of the display 25 than the first enlarged image 360A is, the CPU 11a performs control to display the background image information 95 on the display 25.

In the above-described example, when the corresponding image 370 is selected first, the background image information 95 is displayed. However, the background image information 95 may also be displayed when the third file icon 310h on the workspace 400 is selected first.

More specifically, when the third file icon 310h on the workspace 400 is selected first, the second enlarged image 360B is displayed. In this case, if another file icon is positioned behind the second enlarged image 360B, the background image information 95 may also be displayed.

For example, there may be a situation where a user has selected the third file icon 310h by mistake and wishes to select another file icon.

In this case, if the background image information 95 is displayed, the user can be informed that another file icon is behind the second enlarged image 360B associated with the third file icon 310h. The user can thus select this file icon behind the second enlarged image 360B.

In the above-described example, as a result of displaying the background image information 95 in a region other than the display region for an enlarged image 360, a user is informed of the presence of the third file icon 310h behind the enlarged image 360. However, the presence of a file icon may be informed to the user in a different manner, as described below.

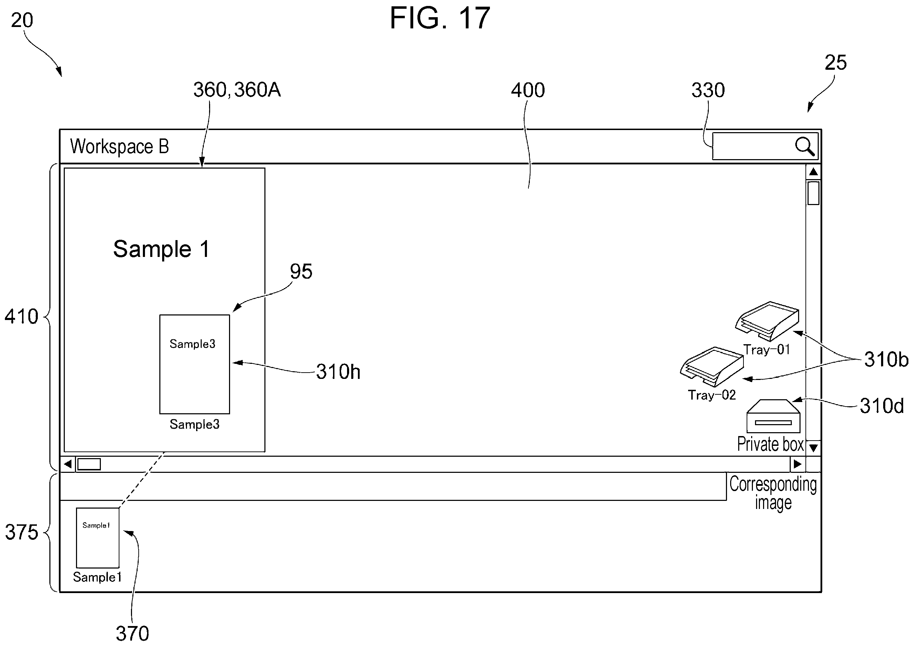

In the display example in Fig. 17, in response to a user selecting the corresponding image 370, the first enlarged image 360A is displayed so that the background image information 95 is seen through the first enlarged image 360A.

In the display mode in Fig. 17, with an increased level of transparency of the first enlarged image 360A, the background of the first enlarged image 360A can be seen through.

In this display mode, when a user has pressed a specific key of the keyboard, the target of the operation that can be performed with the mouse is switched from the first enlarged image 360A to the third file icon 310h behind the first enlarged image 360A.

Then, the user can perform an operation on the third file icon 310h.

To put it another way, in this processing example, with a specific operation performed by a user on the input unit 24 (see Fig. 3), the target of the operation performed by the user is switched to the third file icon 310h behind the first enlarged image 360A.

This enables the user to operate the third file icon 310h, such as selecting the third file icon 310h.

With a specific operation on the input unit 24 by the user, the CPU 11a of the server device 10 may perform control to increase the transparency of the first enlarged image 360A to be higher or to stop displaying the first enlarged image 360A.

Another display example of the background image information 95 will be discussed below.

To display the background image information 95, a workspace 400, which is an example of the display image, may be shifted to display the background image information 95 at a position outside the display region of the first enlarged image 360A.

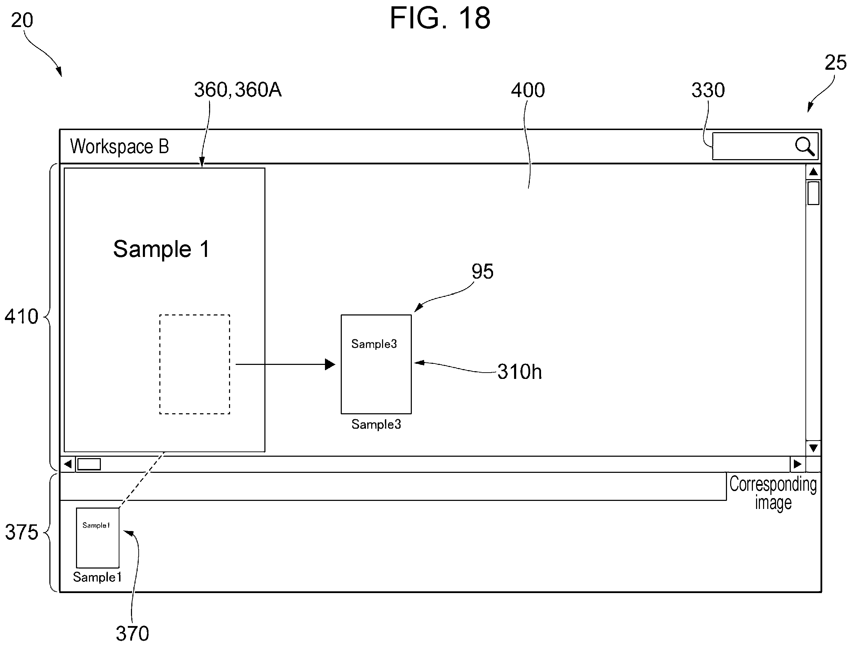

More specifically, as shown in Fig. 18, as a result of shifting the entirety of the workspace 400, the third file icon 310h, which may become a background image, appears. As a result, the background image information 95 is displayed.

In the display example in Fig. 18, the entirety of the workspace 400 is shifted to the right side in Fig. 18, so that the third file icon 310h can be displayed. As a result, the background image information 95 is displayed.

In the exemplary embodiment, when a user first selects the corresponding image 370, the first enlarged image 360A is displayed on the left side of the workspace B.

In the display example in Fig. 18, the entirety of the workspace B is moved to the right side so that the third file icon 310h, which is an example of a background image, is displayed at a position outside the display region of the first enlarged image 360A.

Then, the third file icon 310h is no longer hidden behind the first enlarged image 360A.

In this display example, if the user wishes to refer to another portion of the workspace B, the user can scroll on the workspace B to view this portion.

In the exemplary embodiment, the workspace 400 including the third file icon 310h, which may become a background image, is displayed on the display 25.

In the display example in Fig. 18, the entirety of the workspace 400 is shifted so that the third file icon 310h, which may become a background image, is displayed at a position outside the display region of the first enlarged image 360A.

In this manner, even when the first enlarged image 360A is displayed, information on the third file icon 310h positioned behind the first enlarged image 360A is displayed, thereby enabling a user to view or select the third file icon 310h.

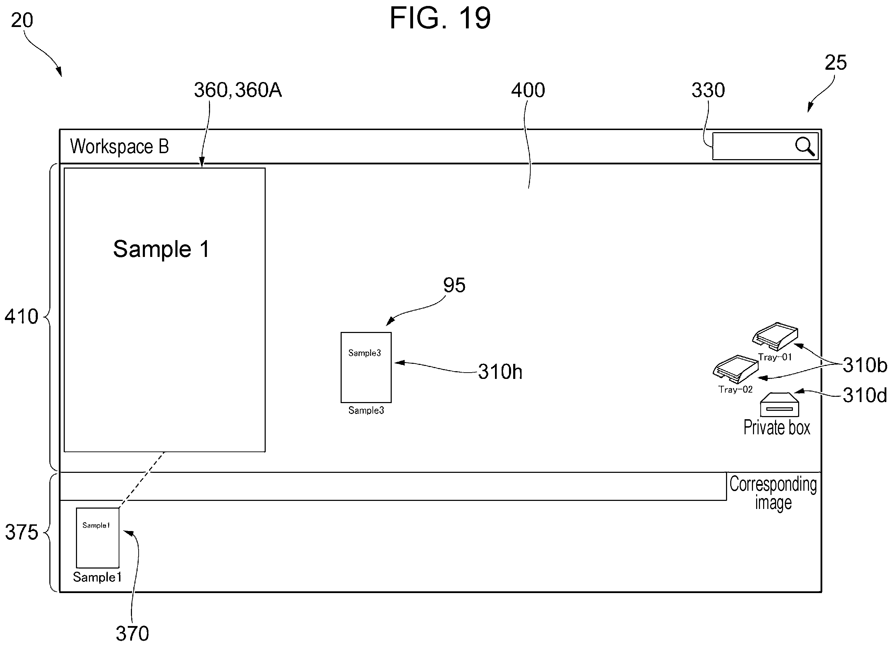

Alternatively, as shown in Fig. 19, the workspace B, which is an example of the display image, may be shrunk, so that the third file icon 310h, which may become a background image, is displayed at a position outside the display region of the first enlarged image 360A.

In this case, too, information on the third file icon 310h is displayed on the display 25, so that the user can select the third file icon 310h.

In this manner, as a result of shrinking the area of a workspace 400, the third file icon 310h, which may become a background image, is displayed at a position outside the display region of the first enlarged image 360A.

In the display examples in Figs. 16 through 19, an icon is displayed as the background image information 95. As stated above, however, the background image information 95 may be formed as an item other than an icon.

For example, the background image information 95 may be displayed in a text format. Text, such as "There is a file called file X behind the enlarged image 360", may be displayed.

To inform a user of the presence of the background image information 95, a list of the file names of files represented by file icons may be displayed.

The background image information 95 may be displayed in response to an instruction to display the background image information 95 from a user. The presence of the background image information 95 may be informed to a user in response to an instruction from the user.

More specifically, display processing, such as that shown in one of Figs. 16 through 19, may be executed in response to an instruction from a user.

An instruction from a user is received via the input unit 24 (see Fig. 3). When a specific operation is performed on the input unit 24, the background image information 95 is displayed.

More specifically, in response to a specific operation performed with the mouse or pressing of a specific key of the keyboard, the background image information 95 is displayed.

In the exemplary embodiment, as stated above, if the third file icon 310h is located behind the first enlarged image 360A and if a predetermined condition is satisfied, the background image information 95 is displayed on the display 25.

One of the examples of the predetermined condition is an instruction from a user. In response to an instruction from a user, the background image information 95 may be displayed.

In the above-described examples, a user can select the background image information 95.

However, a user may not be able to select the background image information 95. Even in this case, if the presence of the background image information 95 is informed to the user, the user can recognize the presence of a file behind the first enlarged image 360A. Then, for example, the user manually erases the first enlarged image 360A from the display 25 temporarily and selects the file.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing system comprising:
a processor configured to:
display an enlarged image on a display in response to a file image being selected, the file image being an image corresponding to a file and displayed on the display, the enlarged image being an image associated with the selected file image and having a display size larger than the selected file image; and
display information on a background image on the display if a file image is located behind the displayed enlarged image and if a predetermined condition is satisfied, the background image being the file image located behind the displayed enlarged image.

2. The information processing system according to Claim 1, wherein the processor is configured to display the information on the background image on the display if a first enlarged image, which is the enlarged image, and a second enlarged image are displayed with a predetermined positional relationship, the second enlarged image being an enlarged image displayed in response to a file image being selected after a file image based on which the first enlarged image is displayed is selected, the background image being a file image located behind the displayed first enlarged image.

3. The information processing system according to Claim 2, wherein the processor is configured to display the information on the background image on the display if the first enlarged image and the second enlarged image are displayed without overlapping each other.

4. The information processing system according to Claim 2, wherein the processor is configured to display the information on the background image on the display if the first enlarged image, which is displayed prior to the second enlarged image, is displayed closer to an edge of the display than the second enlarged image is and if the second enlarged image is displayed closer to a center of the display than the first enlarged image is.

5. The information processing system according to Claim 1, wherein the processor is configured to:
switch a display image including a file image to another display image including a file image by changing displaying of the display in response to an instruction;
display a corresponding image on the display if a first display image is displayed on the display and if a specific condition is satisfied, the corresponding image being an image corresponding to a file image included in a second display image;
display an enlarged image on the display in response to the corresponding image being selected, the enlarged image being an image associated with a file image included in the second display image and having a display size larger than a file image associated with the corresponding image; and
display the information on the background image on the display if another file image is located behind the displayed enlarged image, the background image being the file image located behind the displayed enlarged image.

6. The information processing system according to Claim 5, wherein the processor is configured to display the information on the background image at a portion of the display outside a region where the first display image and the second display image are displayed.

7. The information processing system according to Claim 1, wherein the processor is configured to:
display the file images within a predetermined display region of the display; and
display the information on the background image outside the predetermined display region.

8. The information processing system according to Claim 1, wherein the processor is configured to display the information on the background image at a portion of the display outside a region where the enlarged image is displayed.

9. The information processing system according to Claim 1, wherein the processor is configured to:
display a display image including a file image on the display, the file image being likely to be the background image; and
display the information on the background image as a result of shifting the display image to display the file image at a position outside a region where the enlarged image is displayed.

10. The information processing system according to Claim 1, wherein the processor is configured to:
display a display image including a file image on the display, the file image being likely to be the background image; and
display the information on the background image as a result of shrinking the display image to display the file image at a position outside a region where the enlarged image is displayed.

11. The information processing system according to any one of Claims 1 to 10, wherein the processor is configured to display the information on the background image in a state in which a user is able to select the information.

12. A program causing a computer to execute a process, the process comprising:
displaying an enlarged image on a display in response to a file image being selected, the file image being an image corresponding to a file and displayed on the display, the enlarged image being an image associated with the selected file image and having a display size larger than the selected file image; and
displaying information on a background image on the display if a file image is located behind the displayed enlarged image and if a predetermined condition is satisfied, the background image being the file image located behind the displayed enlarged image.

13. An information processing method comprising:
displaying an enlarged image on a display in response to a file image being selected, the file image being an image corresponding to a file and displayed on the display, the enlarged image being an image associated with the selected file image and having a display size larger than the selected file image; and
displaying information on a background image on the display if a file image is located behind the displayed enlarged image and if a predetermined condition is satisfied, the background image being the file image located behind the displayed enlarged image.
